(19) Europäisches Patentamt / European Patent Office / Office européen des brevets

(11) **EP 2 544 100 A2**

(12) **EUROPEAN PATENT APPLICATION**

(43) Date of publication:
**09.01.2013 Bulletin 2013/02**

(51) Int Cl.:
**G06F 17/22** *(2006.01)*  **G06F 17/27** *(2006.01)*

(21) Application number: **12174458.5**

(22) Date of filing: **29.06.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **04.07.2011 JP 2011148466**

(71) Applicant: **Hitachi Ltd.**
**Tokyo (JP)**

(72) Inventor: **Kobayasi, Yosiyuki**
**Chiyoda-ku, Tokyo 100-8220 (JP)**

(74) Representative: **Moore, Graeme Patrick**
**MEWBURN ELLIS LLP**
**33 Gutter Lane**
**London Greater London EC2V 8AS (GB)**

(54) **Method and system for making document modules**

(57)  Automatic extraction of a document module from a plurality of documents and creation of a document module database.

A method of making a document module, which is performed in a computer system including a computer, having a program for realizing a document module making module for making the document module, and a document module database, the document module making module including an analysis module and a similarity calculation module, the method including: a step of comparing the plurality of the subject documents, which read from the document module database, with each other to calculate the similarity in the arrangement of the characters of the strings between the plurality of the subject documents, and extracting first similar strings based on the calculated similarity; and a step of registering, each of the first similar strings as the document module to the document module database.

FIG. 1

EP 2 544 100 A2

**Description**

CLAIM OF PRIORITY

The present application claims priority from Japanese patent application JP 2011-148466 filed on July 4 2011, the content of which is hereby incorporated by reference into this application.

BACKGROUND OF THE INVENTION

This invention relates to a method of constructing a database of document modules to be used to efficiently produce a document, and a computer system for constructing the database.

In a case where a business document is produced, the similar contents is often used repeatedly. For example, in a case where a manual for a product is produced, it is conceivable to produce a manual for a new product based on a product manual for an old model. On this occasion, the manual for the product can be efficiently produced by reusing common documents and similar documents.

In this context, it is conceivable to define document modules to be reused for the document production, and to organize a plurality of document modules, thereby efficiently producing a document of high quality.

Regarding a method of producing a document by using document modules, the Darwin Information Typing Architecture (DITA), which is an international standard for a description format of document modules, is established by the Organization for Advancement of Structured Information Standards (OASIS).

The OASIS is a non-profit international consortium, and is a group establishing and promoting various standards relating to electronic documents. Standards established by the OASIS are internationally and widely employed.

The DITA is a standard for describing a structure of a document based on the XML. The DITA defines the document by dividing the documents into two types, that is, topics and a map. Document modules to be reused are defined as topics. A reference to an entirety or a part of a topic is defined in the map. A document can be produced by freely organizing topics and parts of topics.

As a method for describing a document module as a reusable topic, a topic-oriented document writing is proposed. Document modules can be produced by following the rule of this document production method.

Moreover, as a method for supporting efficient document production in a state in which document modules are produced, a method described in Japanese Patent Application Laid-open No. 2010-108453, for example, is proposed. As described above, the production of a document by using document modules has become a standard method for efficient document production.

SUMMARY OF THE INVENTION

However, in the document module production methods proposed previously, a user is expected to define document modules before the production of the document. Moreover, in a case where a document is newly produced, reusable document modules are expected to be produced in accordance with procedures for document production such as the topic-oriented document writing.

Therefore, according to the above-mentioned methods, only document modules defined in advance by a user can be used.

In a case where a document is produced by using document modules, a large amount of documents which have been produced before and accumulated is expected to be utilized. In a case where a user does not define document modules, it is conceivable that documents whose document structure is described by using the Standard General Mark-up Language (SGML) or extensible Mark-up Language (XML) are prepared, from which a part of document structure specified by the user is extracted.

However, only document modules acquired by extracting areas easily specified as a structure in the SGML and XML, such as pages, figures, and tables, can be used.

Thus, a method of efficiently producing arbitrary document modules to be reused from a large amount of documents is expected.

The present invention can be appreciated by the description which follows in conjunction with the following figures, wherein: a method of making a document module, which is performed in a computer system including a computer and a document module database for storing management information on a document module serving as an element constituting a document. The computer having a processor, a memory coupled to the processor, and a first interface coupled to the processor, for coupling the computer to another device, the document module database having a controller, a storage medium coupled to the controller, and a second interface for coupling the document module database to another device. The memory storing a program for realizing a document module making module for making the document module, the document module making module including an analysis module for extracting, from a document file including strings, a subject document which is information on the strings, and a similarity calculation module for calculating a similarity in an arrangement of characters between the strings. The method including a first step of receiving, by the document module making module, a plurality of the document files; a second step of extracting, by the document module making module, the subject document from each of the plurality of the document files by analyzing the each of the plurality of the document files, and storing a plurality of the extracted subject documents in the document module database. Further, the method including a third step of reading, by the document module making module, the plurality of the subject documents from the document module database, comparing the plurality of the read subject documents with each other to calculate the similarity in the arrangement of the characters of the strings between the plurality of the read subject documents, and extracting first similar strings based on the calculated similarity; a fourth step of constituting, by the document module making module, a group for each correspondence in the first similar strings between the plurality of the subject documents; and a fifth step of registering, by the document module making module, for each group, each of the first similar strings as the document module to the document module database.

According to the exemplary embodiment of this invention, the document modules can automatically be made from a plurality of documents. Moreover, a document module database enabling effective management for each group can be constructed.

BRIEF DESCRIPTION OF THE DRAWINGS

The present invention can be appreciated by the description which follows in conjunction with the following figures, wherein:

FIG. 1 is an explanatory diagram illustrating a configuration of a document making module according to the embodiment of this invention;

FIG. 2 is a block diagram illustrating a configuration example of a computer system according to this embodiment of this invention;

FIG. 3 is an explanatory diagram illustrating an example of a document module database according to the embodiment of this invention;

FIG. 4 is an explanatory diagram illustrating an example of a document file management table according to the embodiment of this invention;

FIG. 5 is an explanatory diagram illustrating an example of a similar string management table according to the embodiment of this invention;

FIG. 6 is an explanatory diagram illustrating an example of an item string management table according to the embodiment of this invention;

FIG. 7 is an explanatory diagram illustrating an example of a correspondence management table according to the embodiment of this invention;

FIG. 8 is an explanatory diagram illustrating an example of a document module management table according to the embodiment of this invention.

FIG. 9 is an explanatory diagram illustrating an example of a processing result obtained by an inter-document similarity evaluation module according to the embodiment of this invention;

FIGS. 10A and 10B are explanatory diagrams illustrating examples of subject documents according to the embodiment of this invention;

FIGS. 11A and 11B are explanatory diagrams illustrating examples of a dynamic programming according to the embodiment of this invention;

FIG. 12 is an explanatory diagram illustrating an example of an extraction result of a first similar string according to the embodiment of this invention;

FIG. 13 is an explanatory diagram illustrating a processing result after a self-similarity evaluation module according to this embodiment of this invention carries out processing;

FIG. 14 is a flowchart illustrating an example of processing carried out by a table-of-contents portion extraction module according to this embodiment of this invention;

FIG. 15 is an explanatory diagram illustrating an example of a processing result obtained by the table-of contents portion extraction module according to the embodiment of this invention;

FIGS. 16A, 16B, 16C, and 16D are explanatory diagrams illustrating examples of subject documents according to the embodiment of this invention;

FIGS. 17A and 17B are explanatory diagrams illustrating examples of a processing result obtained by a self-similarity evaluation module according to the embodiment of this invention;

FIG. 18 is an explanatory diagram illustrating an example of a processing result obtained by a table-of-contents portion extraction module according to the embodiment of this invention;

FIGS. 19A and 19B are explanatory diagrams illustrating examples of the extraction of a table-of-contents portion according to the embodiment of this invention;

FIG. 20 is a flowchart illustrating a processing carried out by a document module making module according to the embodiment of this invention;

FIGS. 21A to 21F are explanatory diagrams illustrating specific examples of the processing carried out by the document module making module 106 according to the embodiment of this invention;

FIG. 22 is a flowchart illustrating a processing carried out by an item string processing module according to the embodiment of this invention;

FIG. 23 is an explanatory diagram illustrating a flow of processing carried out by the item string processing module according to the embodiment of this invention;

FIG. 24 is a flowchart illustrating a processing carried out by a replaceable string extraction module according to the embodiment of this invention;

FIG. 25 is an explanatory diagram illustrating an example of the replaceable string management table according to the embodiment of this invention;

FIGS. 26A, 26B, and 26C are explanatory diagrams illustrating a specific example of a processing executed by a replaceable string extraction module according to the embodiment of this invention; and

FIG. 27 is an explanatory diagram illustrating an editing screen according to the embodiment of this invention.

## DETAILED DESCRIPTION OF THE PREFERRED EMBODIMENT

Hereinafter, a description is given of an embodiment of this invention referring to the drawings.

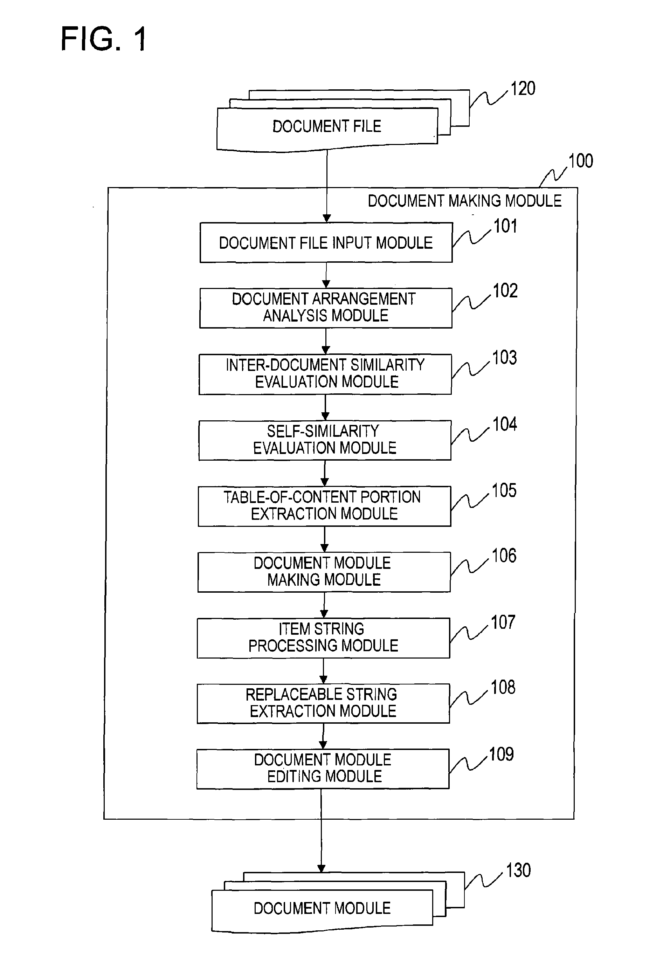

FIG. 1 is an explanatory diagram illustrating a configuration of a document making module 100 according to the embodiment of this invention.

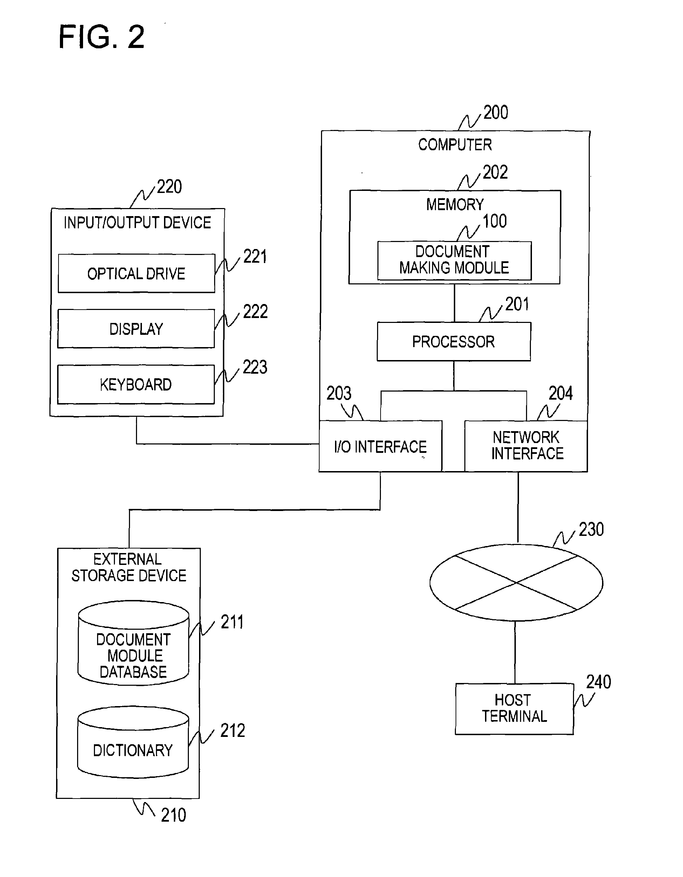

The document making module 100 makes document modules 130. The document making module 100 is a software program executed by a processor 201 illustrated in FIG. 2 provided to a computer 200 illustrated in FIG. 2, and includes a plurality of modules.

Specifically, the document making module 100 includes a document file input module 101, a document arrangement analysis module 102, an inter-document similarity evaluation module 103, a self-similarity evaluation module 104, a table-of-contents portion extraction module 105, a document module making module 106, an item string processing module 107, a replaceable string extraction module 108, and a document module editing module 109.

The document file input module 101 receives an input of a document file 120. Moreover, the document file input module 101 assigns a unique identifier to the input document file 120. Hereinafter, the identifier assigned to the document file 120 is also referred to as document ID.

Herein, the document file 120 refers to file data including documents, figures, and the like. For example, the document file 120 may be data produced by a word processor, data produced by an optical code reader (OCR), and the like.

It should be noted that a document included in the document file 120 is converted into character codes. It should be noted that the document included in the document file 120 may not be a structured document, and there is no limit in type of the character code. In other words, this invention is applicable to the character codes for hiragana or katakana characters (Japanese phonetic alphabet), Chinese characters, alphabets, symbols, and other types of character.

The document arrangement analysis module 102 extracts a document constituted only of strings from one document file 120. Hereinafter, the extracted document is also referred to as subject document. It should be noted that one subject document is extracted from one document file 120.

The inter-document similarity evaluation module 103 compares plurality of subject documents with each other, and extracts strings high in similarity. Hereinafter, a string extracted by the inter-document similarity evaluation module 103 is also referred to as first similar string.

The self-similarity evaluation module 104 compares strings in one subject document with each other, thereby extracting strings high in similarity. Hereinafter, a string extracted by the self-similarity evaluation module 104 is also referred to as second similar string.

The table-of-contents portion extraction module 105 extracts, by analyzing an arrangement of second similar strings, an accumulated portion of second similar strings as a table-of-contents portion of a subject document.

Herein, the table-of-content portion refers to a portion including strings characterizing the subject document, and indicates a portion in which items indicating contents of the subject document are concentrated. For example, a table of contents, a title of a paragraph of a book, and the like are extracted as table-of-contents portions.

Hereinafter, a second similar string included in a table-of-contents portion is referred to as item string.

The document module making module 106 makes a document module from a first similar string based on item strings. Herein, the document module refers to an element constituting a document, and represents a string (document) highly frequently used to produce a document, which is the same as or similar to a subject document.

The item string processing module 107 associates item strings with each other by using a dictionary.

The replaceable string extraction module 108 extracts replaceable strings out of document modules.

The document module editing module 109 corrects and edits a document module.

According to this embodiment, processing is carried out through the following sequence.

First, the document file input module 101 receives a document file 120, and the document arrangement analysis module 102 extracts a subject document from the document file.

Then, the inter-document similarity evaluation module 103 compares a plurality of documents with each other, thereby extracting first similar strings. According to this embodiment, a document module is made from a first similar string.

Then, the self-similarity evaluation module 104 extracts second similar strings, and the table-of-contents portion extraction module 105 analyzes an arrangement of the extracted second similar strings, thereby extracting a table-of-contents portion. As a result, item strings are extracted.

The document module making module 106 makes document modules by using the first similar strings and the item strings. Further, the document module making module 106 determines a name of the document module by using the item strings.

The item string processing module 107 analyzes names of document modules, thereby unifying document modules. The replaceable string extraction module 108 extracts replaceable strings of the document modules.

Finally, the document module editing module 109 receives a correction operation from a user, and makes a final database of document modules.

FIG. 2 is a block diagram illustrating a configuration example of a computer system according to this embodiment of this invention.

The computer system includes a computer 200, an input/output device 220, an external storage device 210, and a host terminal 240.

The computer 200 is a computer for executing the document making module 100. The computer 200 includes a processor 201, a memory 202, an I/O interface 203, and a network interface 204.

The processor 201 executes programs stored in the memory 202. In the following, in a case where a description is given with any one of the document file input module 101, the document arrangement analysis module 102, the inter-document similarity evaluation module 103, the self-similarity evaluation module 104, the table-of-contents portion extraction module 105, the document module making module 106, the item string processing module 107, the replaceable string extraction module 108, or the document module editing module 109 being a subject, the description represents a state in which the processor is executing a program realizing each of those components.

The memory 202 stores programs executed by the processor 201, and information required for executing those programs. Specifically, the memory 202 stores the document making module 100. It should be noted that the memory 202 may store other programs. Moreover, the memory 202 stores character codes to be used for extracting strings.

The I/O interface 203 is an interface for coupling the computer 200 to external devices. The network interface 204 is an interface for coupling the computer 200 to a network 230.

According to this embodiment, the computer 200 is coupled to the input/output device 220 and the external storage device 210. Moreover, the computer 200 is coupled to the host terminal 240 via the network 230. It should be noted that this invention is not limited by a coupling form of the network 230.

The input/ output device 220 is a device for inputting various types of data to the computer 200, and outputting processing results obtained by the computer 200 and the like. Specifically, the input/output device 220 includes an optical drive 221, a display 222, and a keyboard 223. It should be noted that the input/output device 220 may include other configurations.

The optical drive 221 is a device for reading data from a storage medium such as a CD-ROM and a DVD, and writing data to the storage medium. The display 222 is a device for displaying an image used for inputting data into the computer 200, and a processing result of processing carried out by the computer 200. The keyboard 223 is an interface for inputting data to the computer 200.

The external storage device 210 stores a dictionary and a database. The external storage device 210 at least includes one or more storage media (not shown) and a controller (not shown). The storage medium (not shown) provided to the external storage device 210 stores a document module database 211 and a dictionary 212.

The document module database 211 stores information on the document files 120 and information on document modules. The dictionary 212 is a dictionary used for processing carried out by the document making module 100.

The host terminal 240 is a computer for requesting the computer 200 to carry out processing. It should be noted that, according to this embodiment, a description is given of a case where a user directly operates the computer 200, but the computer 200 may receive a processing request from the host terminal 240, and may carry out similar processing.

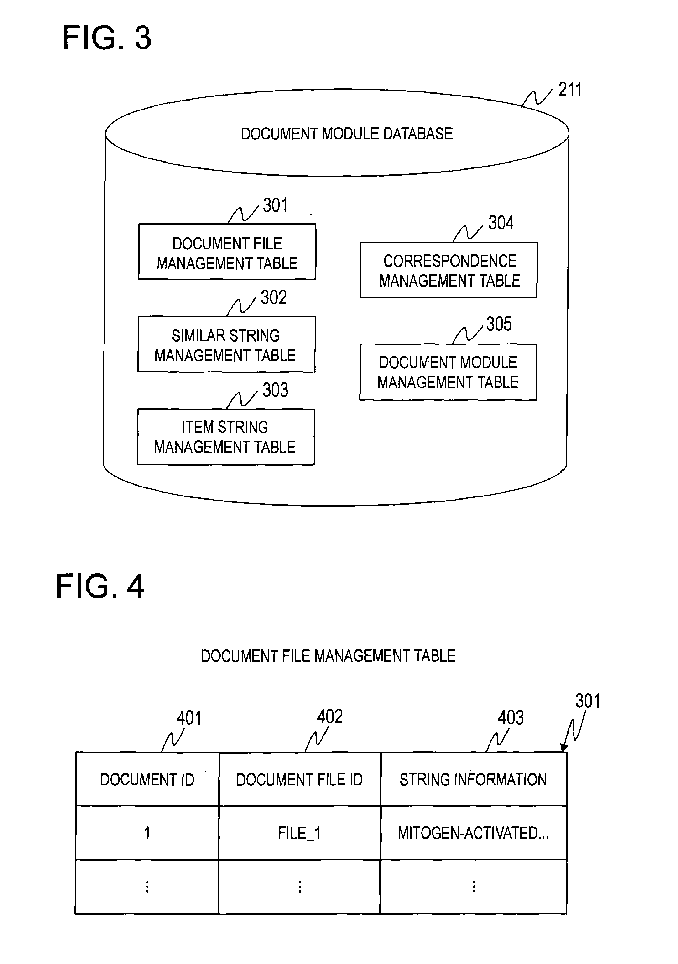

FIG. 3 is an explanatory diagram illustrating an example of the document module database 211 according to the embodiment of this invention.

The document module database 211 includes a document file management table 301, a similar string management table 302, an item string management table 303, a correspondence management table 304, and a document module management table 305. It should be noted that the document module database 211 may include other tables.

The document file management table 301 stores information on document files 120 and subject documents. The similar string management table 302 stores information on first similar strings. The item string management table 303 stores information on item strings.

The correspondence management table 304 stores correspondences in first strings between subject documents. The document module management table 305 stores information on document modules.

A detailed description is now given of the respective tables.

FIG. 4 is an explanatory diagram illustrating an example of the document file management table 301 according to the embodiment of this invention.

The document file management table 301 includes document IDs 401, document file IDs 402, and string information 403.

The document ID 401 stores a document ID for identifying a subject document. The document file ID 402 stores an identifier for identifying a document file 120. The string information 403 stores a subject document (string) extracted from the document file 120.

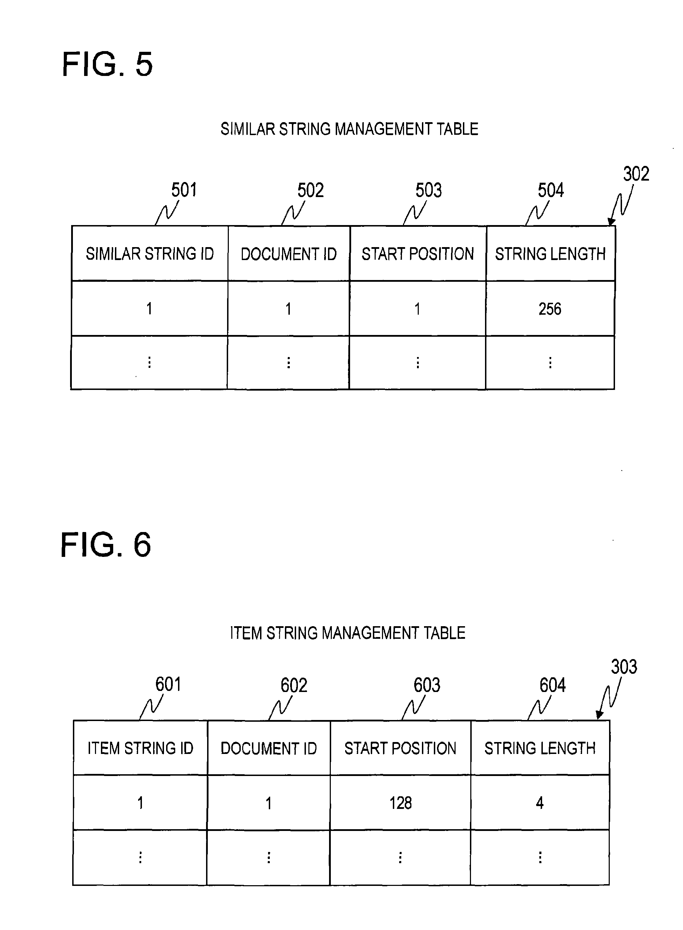

FIG. 5 is an explanatory diagram illustrating an example of the similar string management table 302 according to the embodiment of this invention.

The similar string management table 302 includes similar string IDs 501, document IDs 502, start positions 503, and string lengths 504.

The similar string ID 501 stores an identifier of a first similar string. The document ID 502 stores a document ID for identifying a subject document. The document ID 502 is the same as the document ID 401.

The start position 503 stores a position of a character at the start of the first similar string. The string length 504 stores the number of characters of the first similar string.

The document making module 100 refers to this table, to thereby recognize a subject document including a first similar string from a document ID 502, recognize a start position of the first similar string in the subject document from a start position 503, and recognize the number of characters of the first similar string from the string length 504. In other words, the document making module 100 can recognize the first similar string by referring to the similar string management table 302.

FIG. 6 is an explanatory diagram illustrating an example of the item string management table 303 according to the embodiment of this invention.

The item string management table 303 includes item string IDs 601, document IDs 602, start positions 603, and string lengths 604.

The item string ID 601 stores an identifier for identifying an item string. The document ID 602 stores a document ID for identifying a subject document. The document ID 602 is the same as the document ID 401.

The start position 603 stores a position of a character at the start of the item string. The string length 604 stores the number of characters of the item string.

The document making module 100 refers to this table, to thereby recognize a subject document including an item string from a document ID 602, recognize a start position of the item string in the subject document from a start position 603, and recognize the number of characters of the item string from the string length 604. In other words, the document making module 100 can recognize the item string by referring to the item string management table 303.

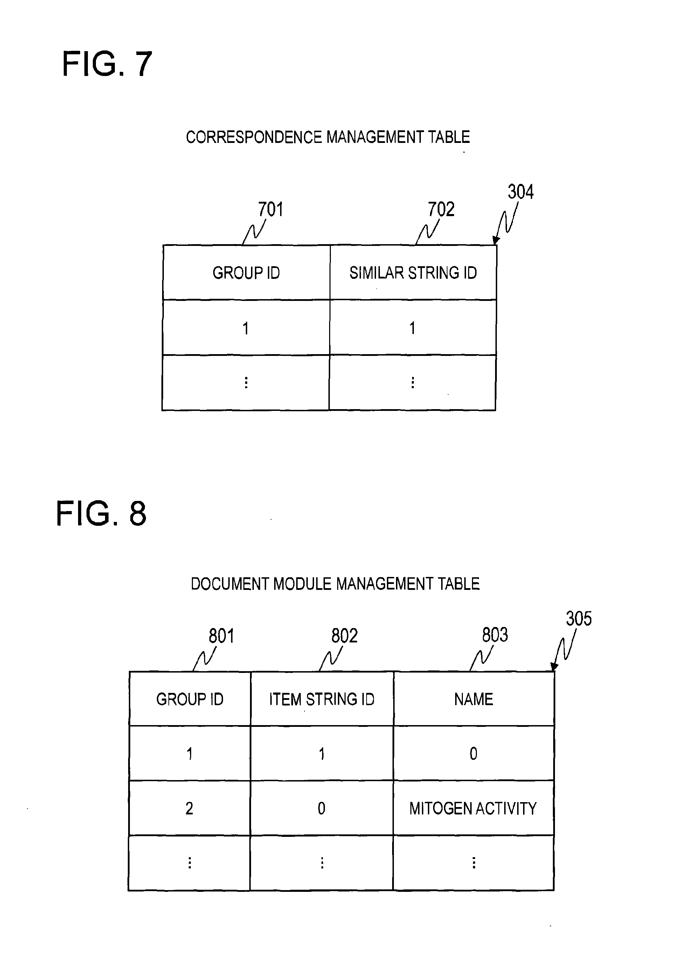

FIG. 7 is an explanatory diagram illustrating an example of the correspondence management table 304 according to the embodiment of this invention.

The correspondence management table 304 includes group IDs 701 and similar string IDs 702.

The group ID 701 stores an identifier for identifying a correspondence in similar string between subject documents. According to this embodiment, a set of corresponding similar strings is treated as a group.

The similar string ID 702 stores an identifier for identifying a first similar string. The similar string ID 702 is the same as the similar string ID 501.

FIG. 8 is an explanatory diagram illustrating an example of the document module management table 305 according to the embodiment of this invention.

The document module management table 305 includes group IDs 801, item string IDs 802, and names 803.

The group ID 801 stores an identifier for identifying a correspondence in similar string between subject documents. The group ID 801 is the same as the group ID 701.

The item string ID 802 stores an identifier for identifying an item string. The item string ID 802 is the same as the item string ID 601.

The name 803 stores a name of a document module.

A description is later given of a method of updating each of the tables stored in the document module database 211.

A description is now given of processing carried out by each of the components of the document making module 100.

The document file input module 101 receives a document file 120 input from a storage medium inserted into the optical drive 211 or the keyboard 223. The document file input module 101 assigns a document ID to the received document file 120, and stores the document file 120 in the document module database 211.

Specifically, the document file input module 101 generates an entry in the document file management table 301, and stores information corresponding to the document ID 401 and the document file ID 402 of this entry. On this occasion, a subject document is not extracted, and hence information is not stored in the string information 403.

According to this embodiment, the document making module 100 compares a plurality of document files 120 with each other, thereby making document modules. Therefore, the plurality of document files 120 are input to the document file input module 101.

On this occasion, manuals for similar products, a document group (such as a group of books) different in edition, a document group retrieved based on similarity in document, and the like are conceivable as the plurality of document files 120.

The document arrangement analysis module 102 extracts a subject document from a document file 120 including strings, images, tables, headers, footers, pages, and the like. For example, in a case where a text file is input, the document arrangement analysis module 102 extracts all contents of the file as a subject document. In a case where a file produced by using a word processor is input, information explicitly representing a document body portion, an image portion, a table portion, a header portion, a footer portion, and the like is assigned to this file, and the document arrangement analysis module 102 extracts a document body portion as a subject document in accordance with the above-mentioned information.

Moreover, the document arrangement analysis module 102 stores the extracted subject document in the document module database 211. Specifically, the document arrangement analysis module 102 stores information on the subject document in the string information 403 of a corresponding entry of the document file management table 301.

As the method of extracting a subject document, for example, in a case where the document file 120 includes a string portion described in a natural language, and a string portion described in a text format in a markup language such as the SGML and XML, a method of extracting strings described in the markup language and strings described in the natural language is conceivable.

The inter-document similarity evaluation module 103 acquires subject documents from the document file management table 301, and compares the plurality of subject documents with each other, thereby extracting strings (first similar strings) high in similarity. According to this embodiment, a document module is made from a first similar string.

As a method of extracting strings high in similarity, for example, employment of the approximate string matching is conceivable. The approximate string matching is a technology used for matching of strings in a natural language, and detection of a homology in a DNA sequence.

In the case of a natural language, a method of calculating scores by means of the dynamic programming is conceivable. A specific calculation method is described in T.H. Cormen et al. "Introduction to Algorism, Vol.2: Designing and Analytical Method of Algorism" Chapter 16, 1995 printed in Japan, First Version: December 30, 1995, for example, and a detailed description thereof is therefore omitted.

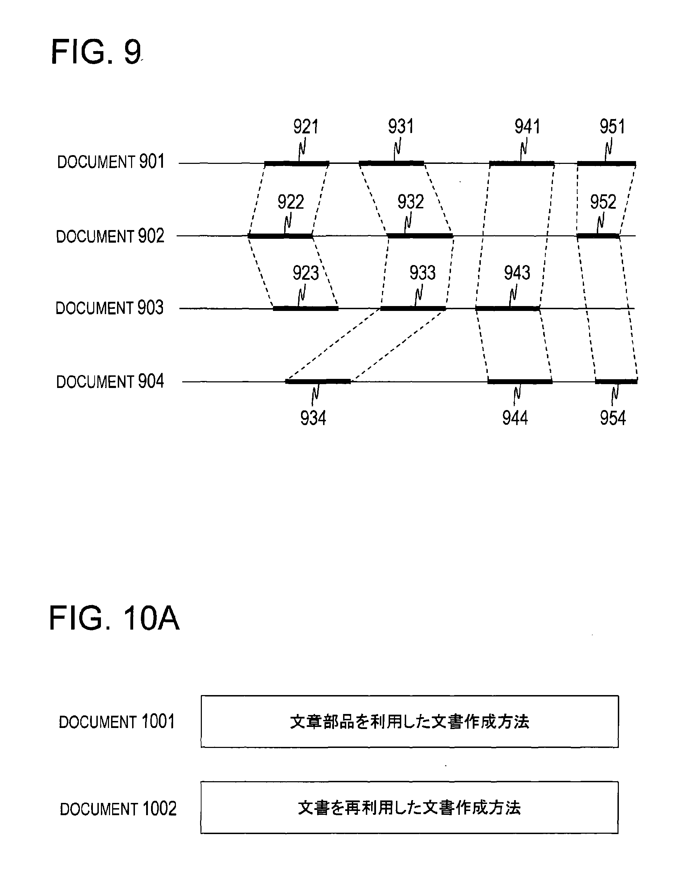

FIG. 9 is an explanatory diagram illustrating an example of a processing result obtained by the inter-document similarity evaluation module 103 according to the embodiment of this invention. FIG. 9 illustrates a comparison result of four subject documents 901 to 904.

In FIG. 9, the subject documents are represented by horizontal lines, and first similar strings are represented by thick horizontal lines. Moreover, correspondences among the first similar strings are represented by broken lines.

Strings 921, 922, and 923 are first similar strings in the subject documents 901, 902, and 903, respectively. Strings 931, 932, 933, and 934 are first similar strings in the subject documents 901, 902, 903, and 904, respectively. Strings 941, 943, and 944 are first similar strings in the subject documents 901, 903, and 904, respectively. Strings 951, 952, and 954 are first similar strings in the subject documents 901, 902, and 904, respectively.

The document making module 100 manages first similar strings corresponding to one another as a group. The user can efficiently produce a document by selecting a proper document module out of document modules included in one group.

A description is now given of an extraction method for first similar strings taking as an example a case where two subject documents are compared with each other. In a case where three or more subject documents are compared with one another, all pairs of subject documents may be calculated.

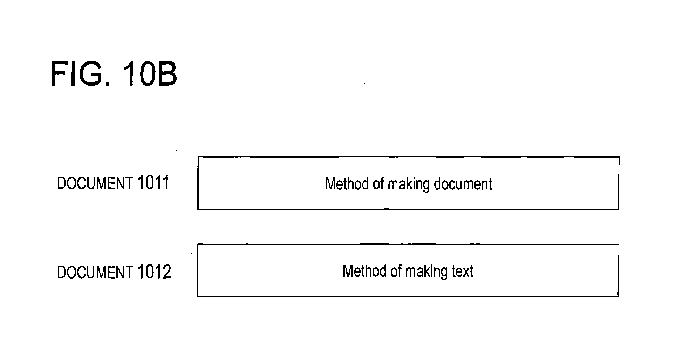

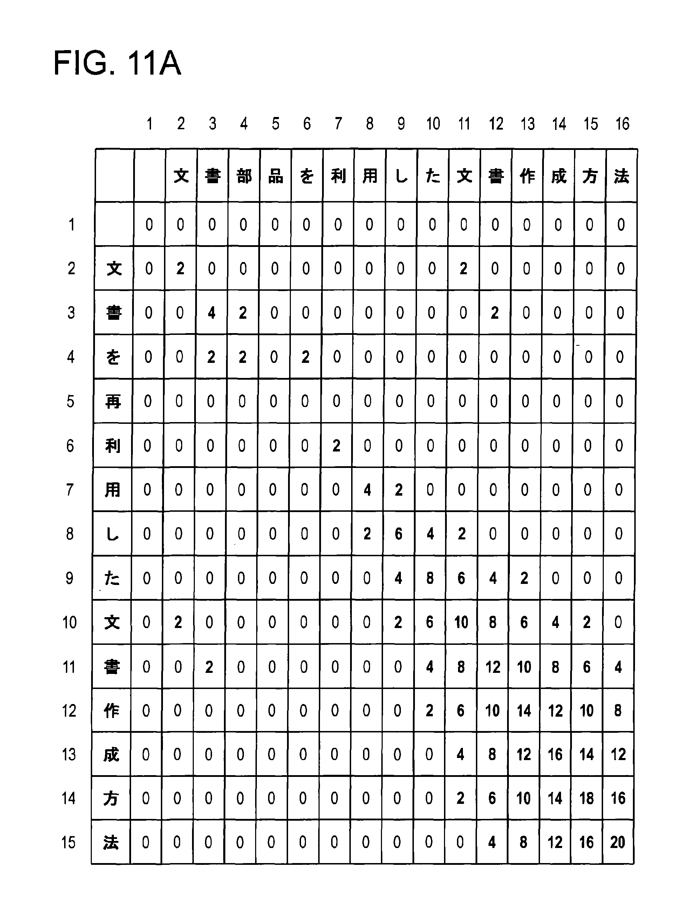

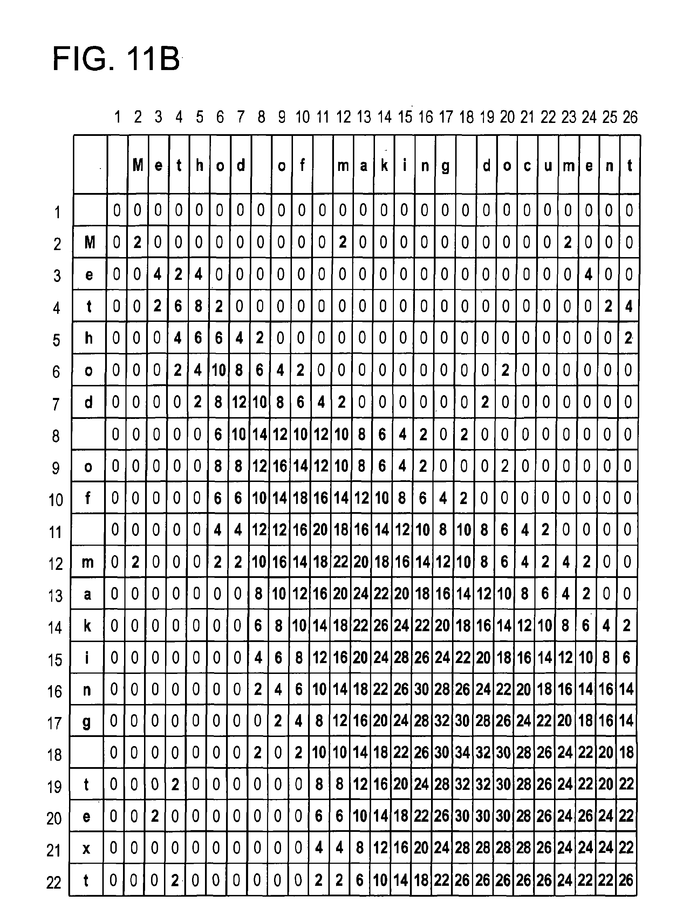

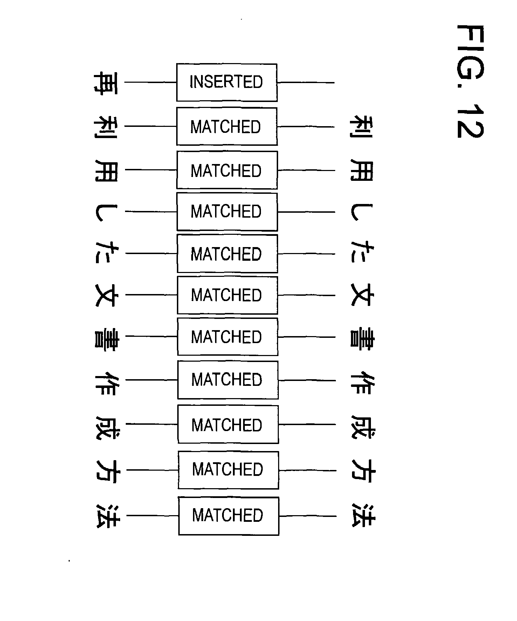

FIGS. 10A and 10B are explanatory diagrams illustrating examples of subject documents according to the embodiment of this invention. FIGS. 11A and 11B are explanatory diagrams illustrating examples of the dynamic programming according to the embodiment of this invention. FIG. 12 is an explanatory diagram illustrating an example of an extraction result of a first similar string according to the embodiment of this invention.

For the sake of simple description, short subject documents are used. Moreover, according to this embodiment, a blank is treated as one string.

The inter-document similarity evaluation module 103 calculates a score for documents 1001 and 1002 illustrated in FIG. 10A. Herein, the score refers to a numerical value representing how much two documents are similar to each other.

According to this embodiment, the inter-document similarity evaluation module 103 calculates the score based on the number of operations required for converting one string to the other string. It should be noted that, as the operations required for the conversion of a string, insertion, deletion, replacement, and the like of a character are conceivable.

The inter-document similarity evaluation module 103 sets a cost to each of the operations required for the conversion of a string, and calculates a total of the costs as the score. According to this embodiment, a cost for the insertion, the deletion, and the replacement of a character is "-2", and a cost that is set in a case where characters match each other is "+2".

As illustrated in FIGS. 11A and 11B, in the dynamic programming, strings to be compared are respectively associated with a column and a row. The inter-document similarity evaluation module 103 manages scores in a two-dimensional table, and calculates the scores in a sequence of square.

On this occasion, the position of a square on the $n$-th row and the m-th column is defined as $(n,m)$. It should be noted that $n$ and $m$ are natural numbers. On this occasion, the score $S(n,m)$ of the square $(n,m)$ can be calculated based on the following Equation (1).

$$S(n,m) =\max\{S(n-1,m-1)+d(n,m),S(n-1,m),S(n,m-1),0\} \qquad \ldots (1)$$

In Equation (1), $d(n,m)$ is a value corresponding to the cost of operations. In other words, in a case where an n-th character in the string corresponding to the row and an m-th character in the string corresponding to the column match each other, the value thereof is "+2", and otherwise, the value is "-2".

It should be noted that the inter-document similarity evaluation module 103 stores a score of each of the squares, and uses the score for calculating other squares. Moreover, the inter-document similarity evaluation module 103 stores scores of other squares used to calculate the score of the square. It should be noted that information on the scores and the like is temporarily stored on the memory 202.

In a case of a square (12,13) of the example illustrated in FIG. 11A, a 13th character of the document 1001 corresponding to the row and a 12th character of the document 1002 corresponding to the column match each other, and $d(12,13)$ is thus "+2". Therefore, a score $S(12,13)$ is calculated as "14" based on the following Equation (2).

$$S(12,13)=\max\{S(11,12)+d(12,13),S(11,13),S(12,12),0\}$$
$$=\max\{12+2,10,10,0\}$$
$$=14 \qquad\qquad \ldots(2)$$

On this occasion, the inter-document similarity evaluation module 103 stores the fact that the score $S(12,13)$ of the square. (12,13) is calculated by using the score $S(11,12)$. In a case where the calculated score is "0", however, the inter-document similarity evaluation module 103 deletes all pieces of information on scores of squares that have been stored.

The score of each of the squares represents the similarity of strings corresponding to the squares which are used to calculate the score. Thus, the inter-document similarity evaluation module 103 can extract a string high in similarity by traversing squares starting from a square high in score in descending order.

It should be noted that the inter-document similarity evaluation module 103 does not traverse again a square which has been traversed by the inter-document similarity evaluation module 103 once. As a result, it is possible to restrain a similar string including the same string from being extracted a plurality of times.

In the example illustrated in FIG. 11A, the score of a square (15,16) is "20", which is the maximum. The inter-document similarity evaluation module 103 identifies squares which have been traversed until the score "20" is calculated.

For example, for the documents 1001 and 1002 illustrated in FIG. 10A, a string illustrated in FIG. 12 is extracted as a first similar string.

In a case where the same method is applied to strings 1011 and 1012 illustrated in FIG. 10B, a result illustrated in FIG. 11B is acquired.

Information on the first similar string extracted by the above-mentioned method is stored in the document module database 211 by the inter-document similarity evaluation module 103. Specifically, the following processing is carried out.

The document similarity evaluation module 103 assigns a similar string ID to the extracted first similar string.

The inter-document similarity evaluation module 103 generates an entry in the similar string management table 302, and stores an identifier in the similar string ID 501 of this entry.

Then, the inter-document similarity evaluation module 103 stores a corresponding document ID in the document ID 502 of this entry.

Further, the inter-document similarity evaluation module 103 stores a position of a start character of the first similar string in the start position 503 of this entry, and stores the number of characters of the first similar string in the string length 504 of this entry.

Moreover, the inter-document similarity evaluation module 103 unifies, based on the comparison result among subject documents, corresponding first similar strings into one group. Further, the inter-document similarity evaluation module 103 assigns a group ID to this group. The inter-document similarity evaluation module 103 generates an entry in the correspondence management table 304, and stores the identifier in the group ID 701 of this entry.

Further, the inter-document similarity evaluation module 103 stores an identifier assigned to the first similar strings corresponding to one another in the similar string ID 702. As a result, the document making module 100 can recognize the correspondence in first similar strings among subject documents as illustrated in FIG. 9.

It should be noted that connections between words and sentences, and the like are not considered in the processing carried out by the inter-document similarity evaluation module 103. Therefore, an extracted string includes improper parts such as a discontinuity between sentences.

This invention has a feature in that the document module making module 106 described later identifies a discontinuity between sentences by using item strings, thereby making one document module. In other words, this invention has a feature in that a document module can be made only by processing strings without using dictionaries.

The self-similarity evaluation module 104 extracts strings (second similar strings) high in similarity in one subject document. According to this embodiment, a table-of-contents portion is extracted based on a distribution of the second similar strings.

The processing carried out by the self-similarity evaluation module 104 is the same as the processing carried out by the inter-document similarity evaluation module 103, and a description thereof is therefore omitted. It should be noted that a subject document itself is not treated as a second similar string. Moreover, strings other than first similar strings are not treated as subjects of the processing.

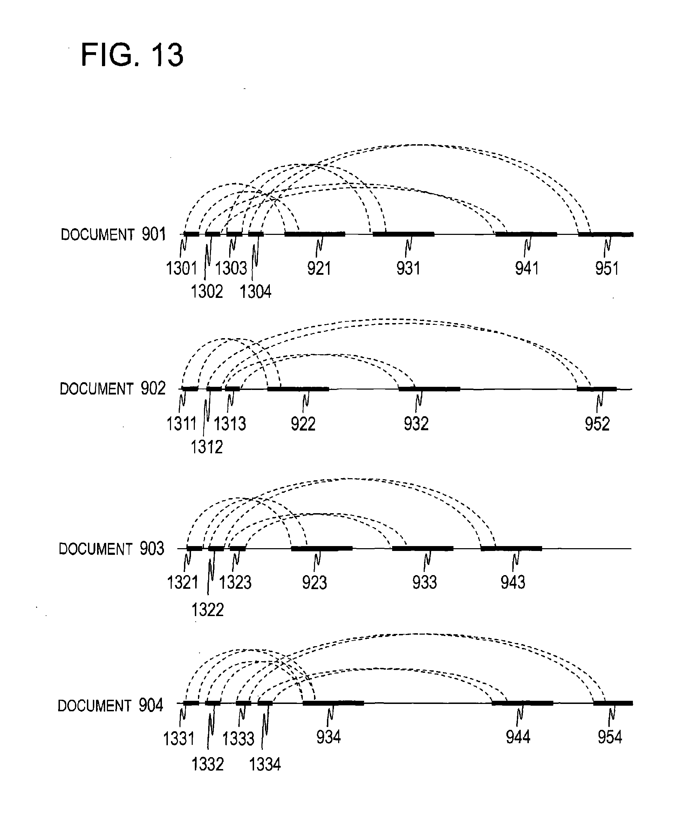

FIG. 13 is an explanatory diagram illustrating a processing result after the self-similarity evaluation module 104 according to this embodiment of this invention carries out processing.

FIG. 13 illustrates an evaluation result of the self-similarity of the respective subject documents 901, 902, 903, and 904. Curves represent correspondences in each of the subject documents. Correspondences in first similar strings among the documents are omitted for the sake of simplicity of illustration.

Strings 1301 to 1304 are second similar strings in the subject document 901. Strings 1311 to 1313 are second similar strings in the subject document 902. Strings 1321 to 1323 are second similar strings in the subject document 903. Strings 1331 to 1334 are second similar strings in the subject document 904.

It should be noted that the self-similarity evaluation module 104 temporarily stores information on the second similar strings in the memory 202. For example, it is conceivable to store the same information as in the similar string management table 302.

It should be noted that a processing result obtained by the self-similarity evaluation module 104 is temporarily stored in the memory 202.

The table-of-contents portion extraction module 105 extracts a table-of-content portion based on the processing result obtained by the self-similarity evaluation module 104. According to this invention, a first similar string is corrected by using item strings included in a table-of-contents portion, and a name of a group is determined by using the item strings.

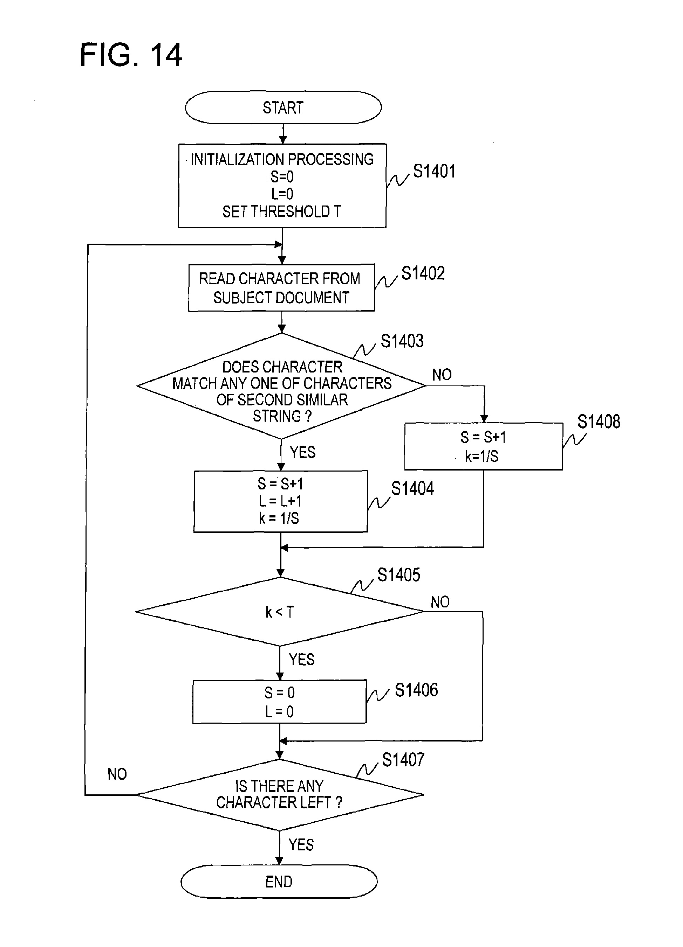

FIG. 14 is a flowchart illustrating an example of processing carried out by the table-of-contents portion extraction module 105 according to this embodiment of this invention.

The table-of-contents portion extraction module 105 starts, in a case where the self-similarity evaluation module 104 finishes the processing, processing based on information on second similar strings stored in the memory 202.

First, the table-of-contents portion extraction module 105 carries out initialization processing (Step S1401).

Specifically, the table-of-contents portion extraction module 105 sets variables S and L to "0", and sets a threshold T to a predetermined value.

On this occasion, the variable S represents the length of a string currently being processed, namely, a total number of read characters. Moreover, the variable L represents a number of characters matching a second similar string out of the string currently being processed. First, the threshold T is predetermined. For example, the value of the threshold T is set to approximately "0.9". It should be noted that the threshold T can be properly changed by the user.

The table-of-contents portion extraction module 105 carries out, after the initialization processing is finished, the following processing in a sequence starting from the first character of a subject document.

First, the table-of-contents portion extraction module 105 reads one character from the subject document (Step S1402).

The table-of-contents portion extraction module 105 determines whether or not the read character matches any one of characters of the second similar strings (Step S1403).

In a case where it is determined that the read character matches any one of characters of the second similar strings, the table-of-contents portion extraction module 105 adds "1" to the variable S and the variable L, and calculates a reciprocal of the variable S as an index k (Step S1404). Then, the table-of-contents portion extraction module 105 proceeds to Step S 1405.

Herein, the index k refers to a value representing whether or not the string is a table-of-contents portion. The index k increases as the range becomes narrower, and the number of characters matching the second similar strings increases. Specifically, the index is evaluated based on a ratio of the number of characters determined to match the second similar strings to the number of characters included in a certain range.

In a case where it is determined that the read character does not match any one of characters of the second similar strings, the table-of-contents portion extraction module 105 adds "1" to the variable $S$, and calculates the index $k$ (Step S1408). Then, the table-of-contents portion extraction module 105 proceeds to Step S1405.

The table-of-contents portion extraction module 105 determines whether or not the index k is smaller than the threshold T (Step S1405). In other words, it is determined whether or not the read character is at the end position of the table-of-contents portion. In a case where the index k is smaller than the threshold T, it is determined that the read character is at the end position of the table-of-contents portion.

In a case where the index k is equal to or larger than the threshold T, the table-of-contents portion extraction module 105 proceeds to Step S1407.

In a case where it is determined that the index k is smaller than the threshold T, the table-of-contents portion extraction module 105 initializes the values of the variables $S$ and $L$ (Step S1406), and proceeds to Step S1407.

The table-of-contents portion extraction module 105 determines whether or not there is a character to be read (Step S1407). In other words, the table-of-contents portion extraction module 105 determines whether or not all the characters of the subject document have been read.

In a case where it is determined that there is a character to be read, the table-of-contents portion extraction module 105 returns to the S1402, and carries out the same processing (Steps S1402 to S1408).

In a case where it is determined that there is no character to be read, the table-of-contents portion extraction module 105 stores the processing result in the document module database 211, and finishes the processing. Specifically, the following processing is carried out.

The table-of-contents portion extraction module 105 searches for, based on the information stored in the memory 202, second similar strings included in the table-of-contents portion. As the search method, a method of carrying out matching between strings is conceivable. A retrieved second similar string is registered as an item string.

The table-of-contents portion extraction module 105 assigns an identifier to the retrieved item string (second similar string).

Then, the table-of-contents portion extraction module 105 generates an entry in the item string management table 303, and stores the assigned identifier in the item string ID 601. Moreover, the table-of-contents portion extraction module 105 stores the identifier of the subject document in the document ID 602 of this entry.

Further, the table-of-contents portion extraction module 105 stores a start position of the second similar string in the subject document in the start position 603 of this entry. Moreover, the table-of-contents portion extraction module 105 stores the number of characters of the second similar string in the string length 604 of this entry.

As a result of the above-mentioned processing, the item strings in the subject document can be recognized.

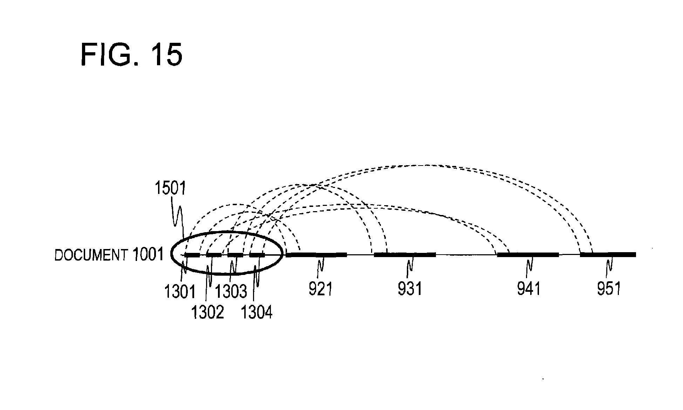

FIG. 15 is an explanatory diagram illustrating an example of a processing result obtained by the table-of-contents portion extraction module 105 according to the embodiment of this invention.

As illustrated in FIG. 15, the table-of-contents portion extraction module 105 extracts a range 1501 in which second similar strings concentrate as a table-of-contents portion. As the threshold T decreases, a range to be extracted as a table-of-contents portion increases.

Referring to specific documents, a description is now given of the processing carried out by the self-similarity evaluation module 104 and the table-of-contents portion extraction module 105.

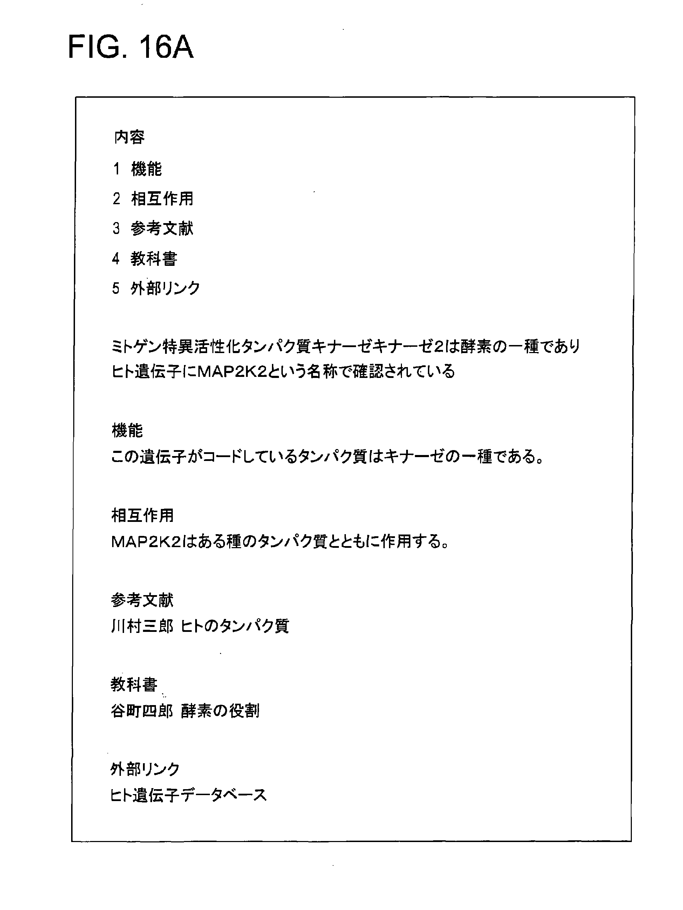

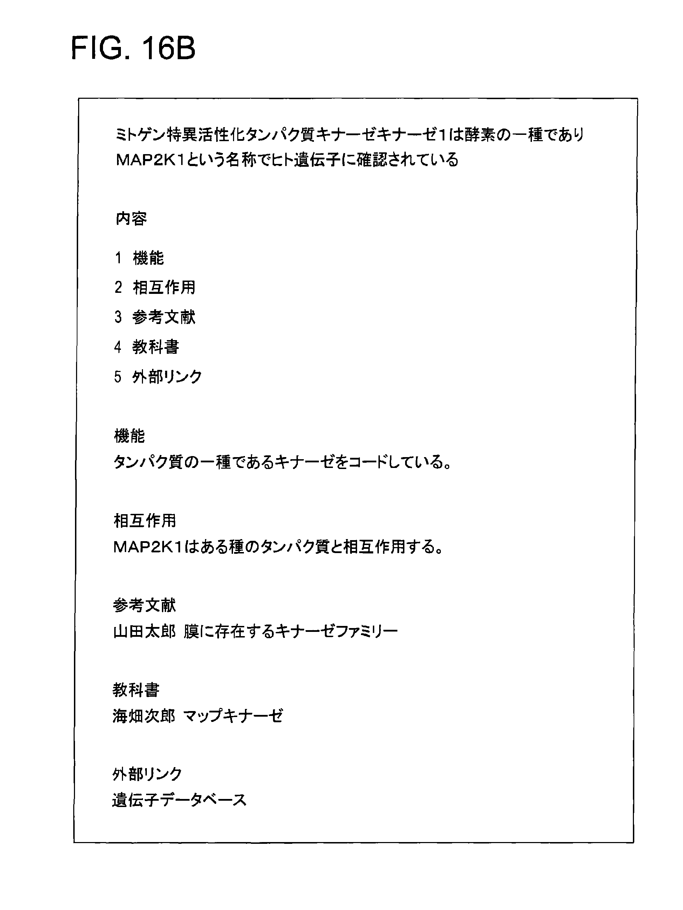

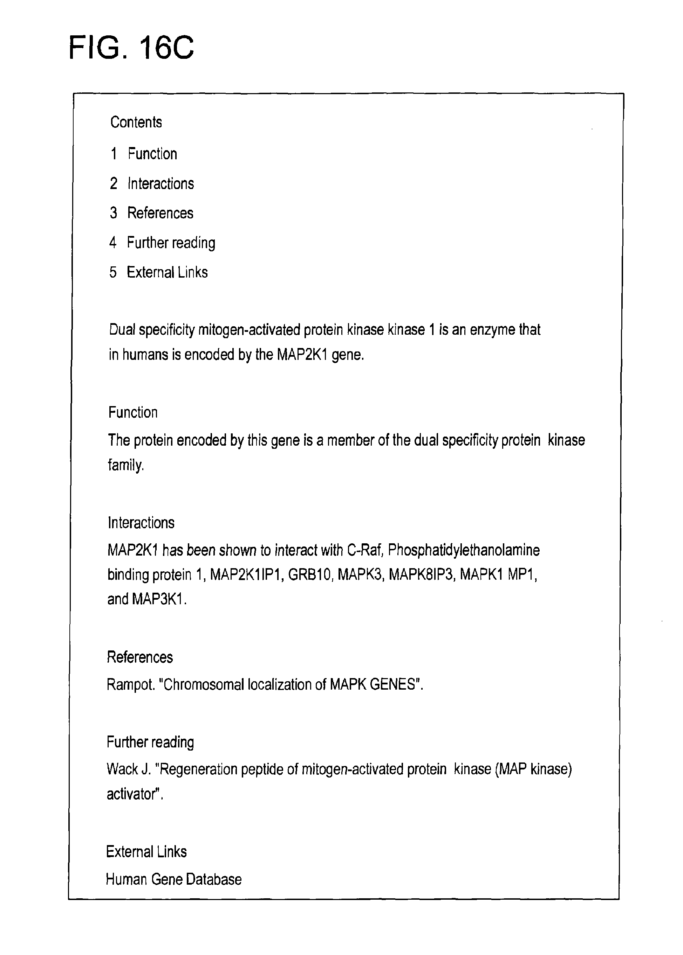

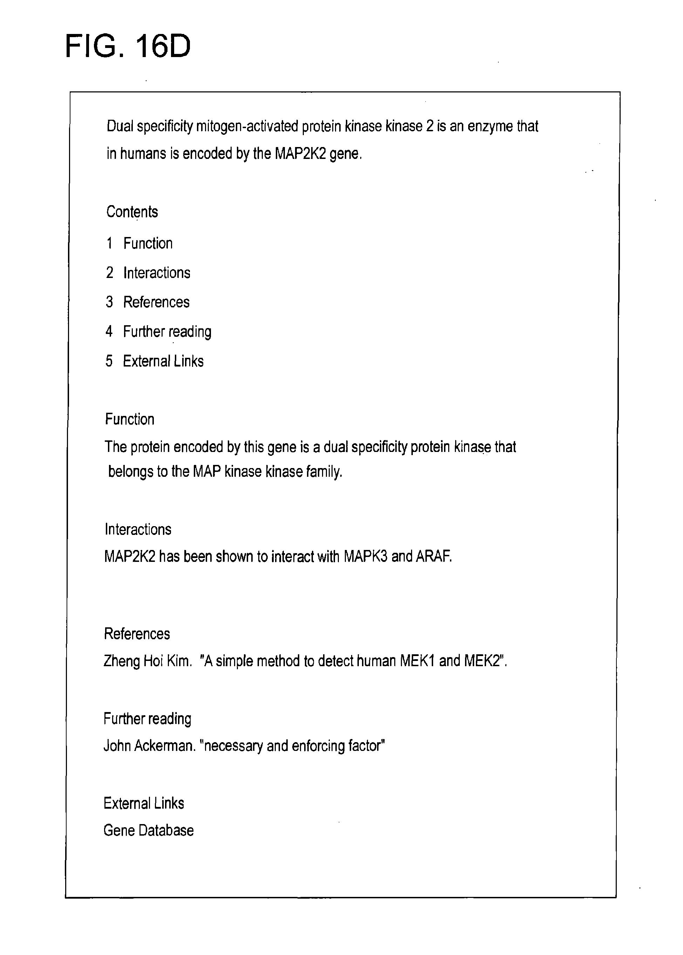

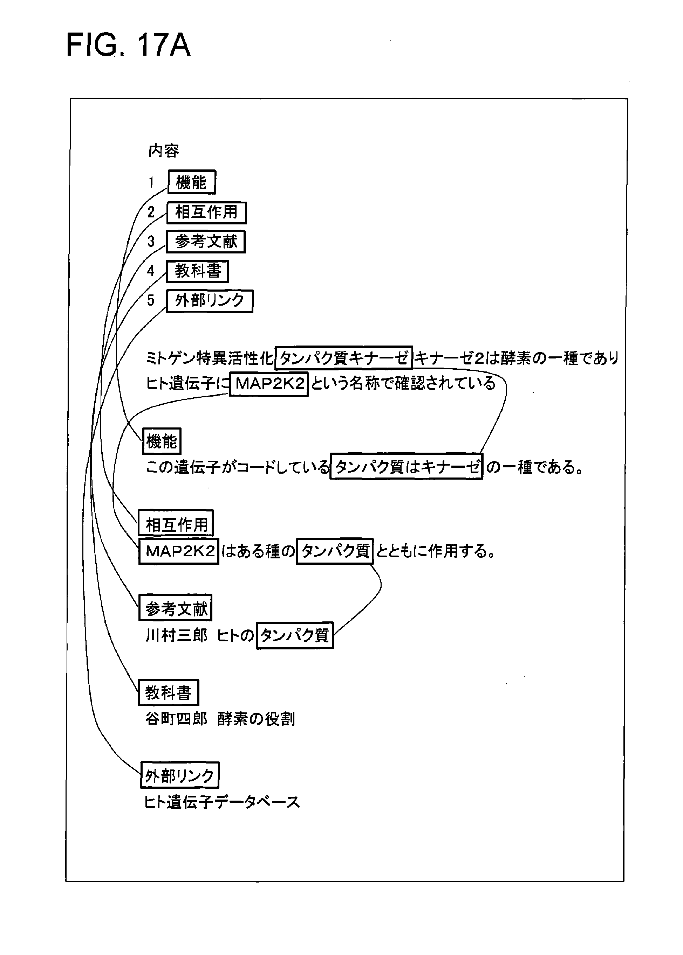

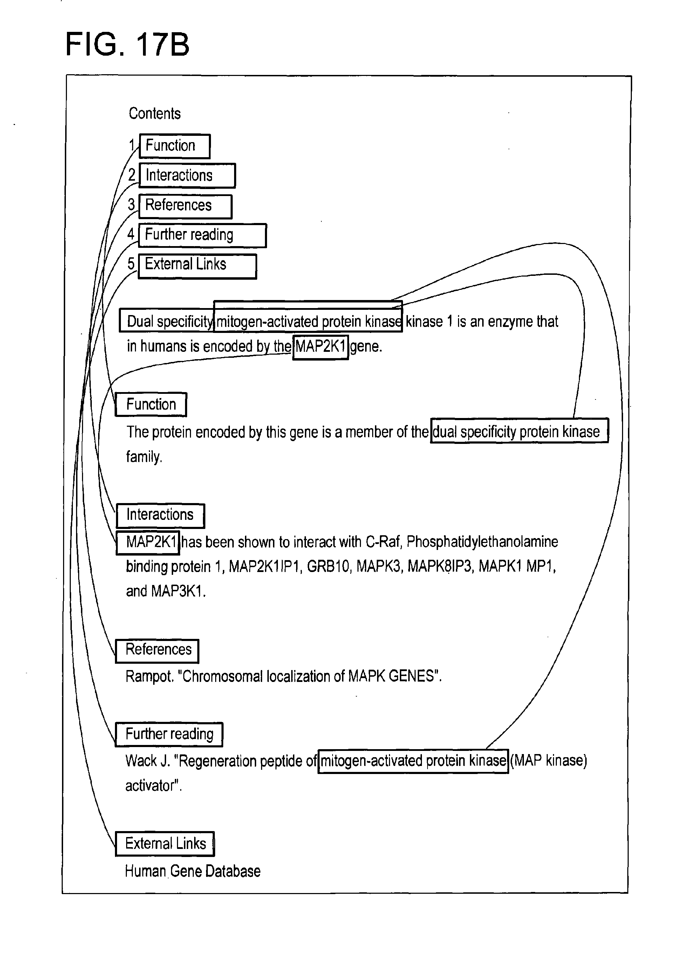

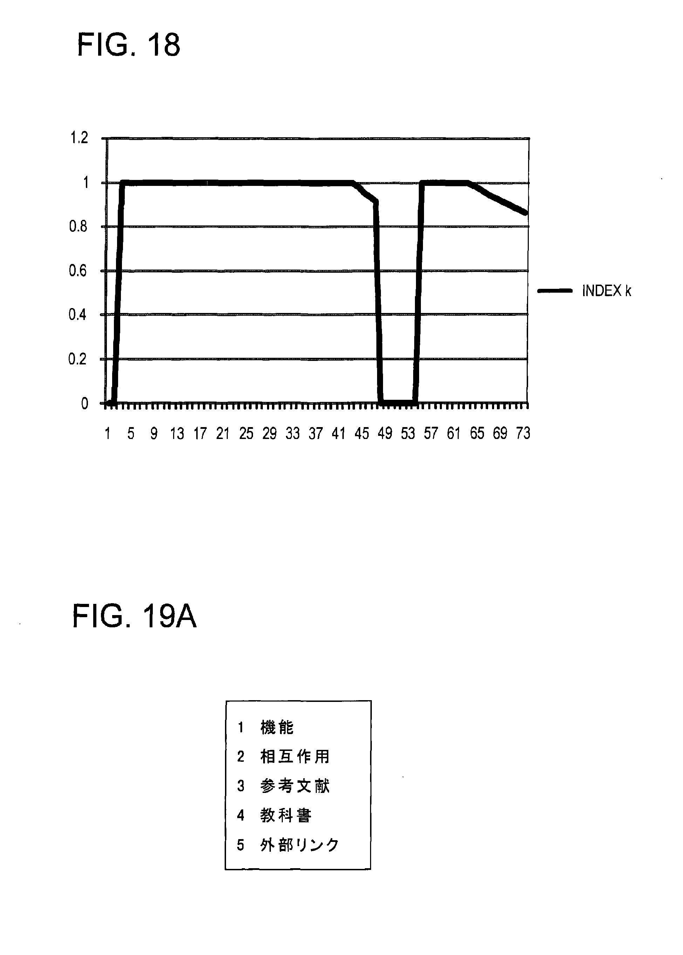

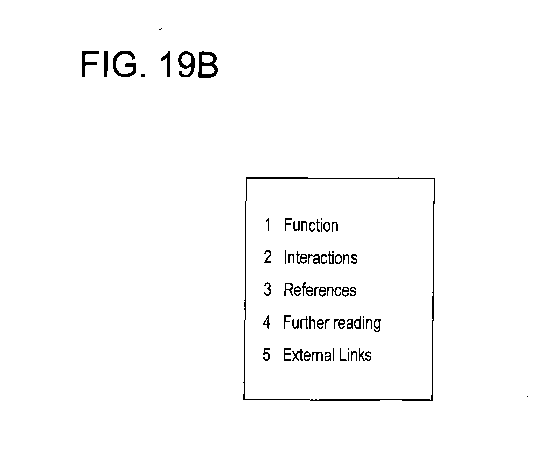

FIGS. 16A, 16B, 16C, and 16D are explanatory diagrams illustrating examples of subject documents according to the embodiment of this invention. FIGS. 17A and 17B are explanatory diagrams illustrating examples of a processing result obtained by the self-similarity evaluation module 104 according to the embodiment of this invention. FIG. 18 is an explanatory diagram illustrating an example of a processing result obtained by the table-of-contents portion extraction module 105 according to the embodiment of this invention. FIGS. 19A and 19B are explanatory diagrams illustrating examples of the extraction of a table-of-contents portion according to the embodiment of this invention.

In a case where the self-similarity evaluation module 104 carries out the processing on the document illustrated in FIG. 16A, the self-similarity evaluation module 104 extracts second similar strings as illustrated in FIG. 17A. Moreover, in a case where the self-similarity evaluation module 104 carries out the processing on the document illustrated in FIG. 16C, the self-similarity evaluation module 104 extracts second similar strings as illustrated in FIG. 17B.

In a case where the table-of-contents portion extraction module 105 carries out the processing on the extraction result of the second similar strings illustrated in FIG. 17A, a value of the index k is represented by a chart illustrated in FIG. 18. In FIG. 18, the horizontal axis represents the number of characters from the start (namely, the sequential order of the character) in the subject document, and the vertical axis represents the value of the index k.

According to this embodiment, a range in a string up to a position immediately before a position where the value of the index k becomes lower than the predetermined threshold is extracted as a table-of-contents portion. In the example illustrated in FIG. 18, a portion from the third character to the 40th character is extracted as a table-of-contents portion.

In a case where the table-of-contents portion extraction module 105 carries out the processing on the subject document illustrated in FIG. 17A, the table-of-contents portion extraction module 105 extracts a table-of-contents portion as illustrated in FIG. 19A. Moreover, in a case where the table-of-contents portion extraction module 105 carries out the processing on the subject document illustrated in FIG. 17B, the table-of-contents portion extraction module 105 extracts a table-of-contents portion as illustrated in FIG. 19B.

The document module making module 106 makes document modules by using first similar strings and item strings. It should be noted that the document module making module 106 carries out processing excluding a portion extracted as a table-of-content portion.

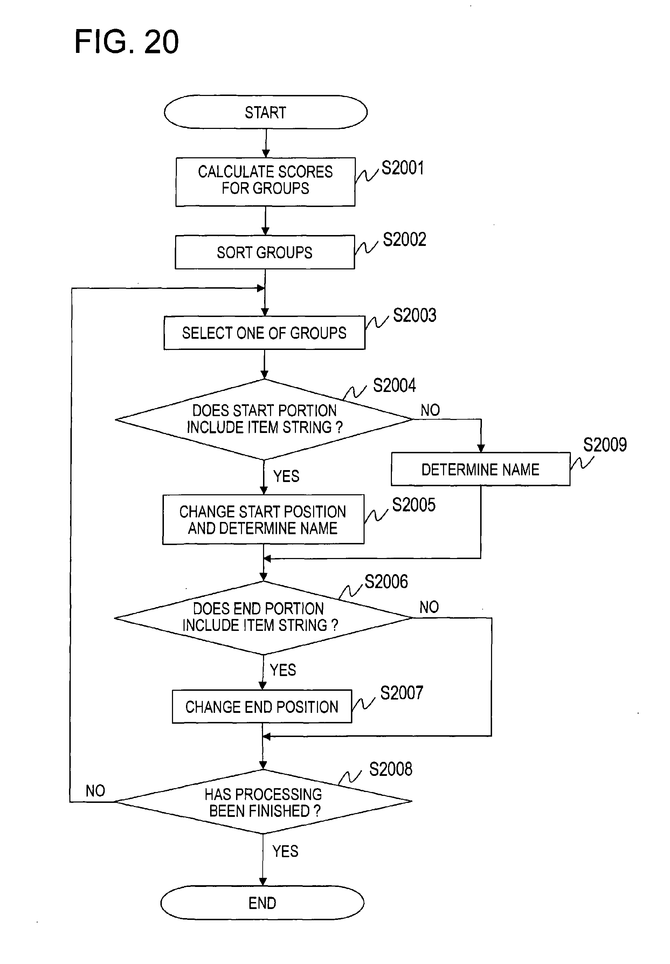

FIG. 20 is a flowchart illustrating the processing carried out by the document module making module 106 according to the embodiment of this invention.

The document module making module 106 calculates a score for each group (Step S2001). For example, in the example illustrated in FIG. 9, the strings 921, 922, and 923 constitute one group. Specifically, the following processing is carried out.

The document module making module 106 refers to the correspondence management table 304, and acquires entries for each of the groups.

The document module making module 106 selects one group. On this occasion, the document module making module 106 generates an entry in the document module management table 305, and stores the same identifier as the identifier in the group ID 702 in the group ID 801 of this entry. It should be noted that values are not stored in the item string ID 802 and the name 803.

The document module making module 106 refers to the correspondence management table 304, and acquires a similar string ID 702 of the entry included in the selected group.

The document module making module 106 refers to the similar string management table 302 based on the acquired similar string ID 702, thereby acquiring entries of corresponding first similar strings.

Further, the document module making module 106 refers to the document file management table 301 based on document IDs 502 of the acquired entries, thereby acquiring string information 403.

The document module making module 106 can acquire all first similar strings corresponding to one another based on start positions 503, string lengths 504, and the acquired string information 403.

Then, the document module making module 106 calculates scores for the acquired plurality of first similar strings based on the following Equation (3).

$$(\text{Similarity})^2/(\text{string length}) \quad \dots \ (3)$$

It should be noted that the similarity can be calculated from the number of characters of a first similar string to be compared and the number of characters different in the first similar string to be compared. In Step S2001, the score increases as the length of a string increases, and as the number of the same characters increases.

The processing in Step S2001 has been described above.

Then, the document module making module 106 sorts the groups in descending order of the calculated score (Step S2002). In other words, the entries in the document module management table 305 are sorted in descending order of the score. As a result, document modules high in frequency of use can be preferentially searched for.

The document module making module 106 selects one of the groups (Step S2003). On this occasion, the groups are selected in descending order of the score.

The document module making module 106 determines whether or not start portions of first strings included in the selected group include a string matching item strings (Step S2004). This processing is processing for determining a name of a group, and for correcting the start position of each of the first similar strings included in the group. Specifically, the following processing is carried out.

First, the document module making module 106 selects an arbitrary first similar string as a representative out of the first similar strings included in the group. Specifically, the document module making module 106 refers to the correspondence management table 304 based on the group ID 801, selects one corresponding entry, and acquires a similar string ID 702 of this entry.

The document module making module 106 refers to the item string management table 303, thereby acquiring an item string. On this occasion, an item string in a subject document corresponding to the selected first similar string is acquired.

Specifically, the document module making module 106 refers to the similar string management table 302 based on the acquired similar string ID 702, thereby acquiring a document ID 502 of a corresponding entry.

Further, the document module making module 106 refers to the item string management table 303 based on the acquired document ID 502, thereby acquiring an entry having the same document ID 602 as the document ID 502. It should be noted that a method of acquiring an item string is the same as the above-mentioned method of acquiring a first similar string, and a description thereof is therefore omitted.

The document module making module 106 searches the start portion of the selected first similar string for the acquired item string. In other words, it is determined whether or not the item string is included in the start portion of the selected first similar string.

It should be noted that the user can determine what range is set as the start portion in the first similar string. For example, a range starting from the first character to the 10th character may be set as a start portion, or a range having the number of characters corresponding to less than 10% of the length of a string may be set as a start portion.

In a case where it is determined that the item string is included in the start portion of the selected first similar string, the document module making module 106 temporarily holds information on the entry of the item string.

The processing in Step S2004 has been described above.

In a case where it is determined that the start portion of the selected first string includes a string matching the item string, the document module making module 106 changes the start positions of all the first similar strings included in the group (Step S2005), and proceeds to Step S2006. Specifically, the following processing is carried out.

The document module making module 106 refers to the correspondence management table 304, and acquires entries having the same group ID 701.

The document module making module 106 selects one of the acquired entries, and refers to the similar string management table 302 based on the similar string ID 702 of this entry, thereby acquiring an entry of the first similar string.

The document module making module 106 changes the start position 503 of the acquired first similar string to the start position 603 of the entry of the matching item string. In other words, the start positions of the first similar strings included in the group are changed to the start positions of the item string. On this occasion, the document module making module 106 accordingly changes the string lengths 504.

In a case where a plurality of item strings are included in the start portion of the first similar string, the document module making module 106 changes the start position to the start position of an item string closest to the start.

Then, the document module making module 106 stores the item string ID 601 of the entry of the acquired item string in the item string ID 802. Further, the document module making module 106 sets the name 803 to "0". In a case where the name 803 is "0", the name of a document module is an item string corresponding to the item string ID 802.

The document module making module 106 repeats the above-mentioned processing for all the first similar strings included in the group.

The processing in Step S2005 has been described above.

In a case where it is determined that the start portion of the selected first similar string does not include a string matching the item string, the document module making module 106 sets the name of the first similar string (Step S2009), and proceeds to Step S2006.

Specifically, the document module making module 106 stores a string in the start portion of the selected first similar string in the name 803 of the document module management table 305, and stores "0" in the item string ID 802.

In a case where the item string 802 is "0", the name of a document module is a string corresponding to the name 803.

Then, the document module making module 106 determines whether or not an end portion of the first similar string includes a string matching an item string (Step S2006). This processing is processing for correcting the end position of a first similar string included in the group. Specifically, the following processing is carried out.

The document module making module 106 selects an arbitrary first similar string from the group. As a method of selecting the first similar string, a method similar to that in Step S2004 is used.

The document module making module 106 acquires an item string in the subject document corresponding to the selected first similar string. As a method of acquiring an item string, a method similar to that in Step S2004 is used.

The document module making module 106 searches the end portion of the selected first similar string for the acquired item string. In other words, it is determined whether or not the item string is included in the end portion of the selected first similar string.

It should be noted that the end portion of the first similar string can be arbitrarily set by the user. For example, a portion from the end character of the first similar string to the tenth character from the end character may be set as the end portion.

The processing in Step S2006 has been described above.

In a case where it is determined that a string matching the item string is not included in the end portion of the first similar string, the document module making module 106 proceeds to Step S2008.

In a case where it is determined that the end portion of the selected first similar string includes a string matching the item string, the document module making module 106 changes the end position of the first similar string (Step S2007), and proceeds to Step S2008.

Specifically, the document module making module 106 changes the end position of each of all the first similar strings included in the group to a position one character before the start position of the corresponding item string. In other words, the document module making module 106 changes the string length 504 of each of the first similar strings.

For example, for a first similar string having the start position 503 of "1" and the string length 504 of "256", in a case where the start position 603 of the matching item string is "128", the end position of the first similar string is changed to "127". In other words, the string length 504 is changed to "127".

In a case where a plurality of item strings are included in the end portion of the first similar string, the document module making module 106 changes the end position to a position one character before the start position of an item string closest to the start.

The document module making module 106 determines whether or not the processing has been finished (Step S2008). For example, in a case where the processing has been finished for all the groups, or in a case where the score of a group becomes a predetermined threshold or less, the document module making module 106 determines that the processing has been finished. It should be noted that the user may set the threshold for each subject document.

In a case where it is determined that the processing has not been finished, the document module making module 106 returns to Step S2008, and repeats the same processing (Steps S2003 to S2009).

Through the processing carried out by each of the document file input module 101 to the document module making module 106, all the tables in the document module database 211 are generated.

As described above, the document module making module 106 sets an item string matching the start portion of a first similar string as a group name. Moreover, the document module making module 106 corrects a first similar string based on item strings respectively matching the start portion and the end portion of the first similar string, thereby making a document module.

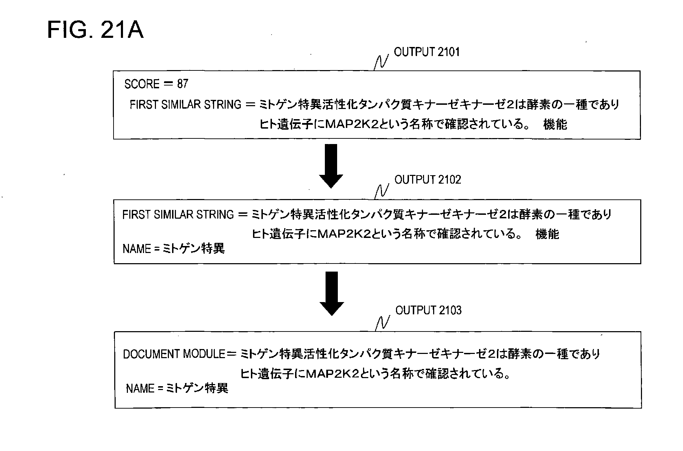

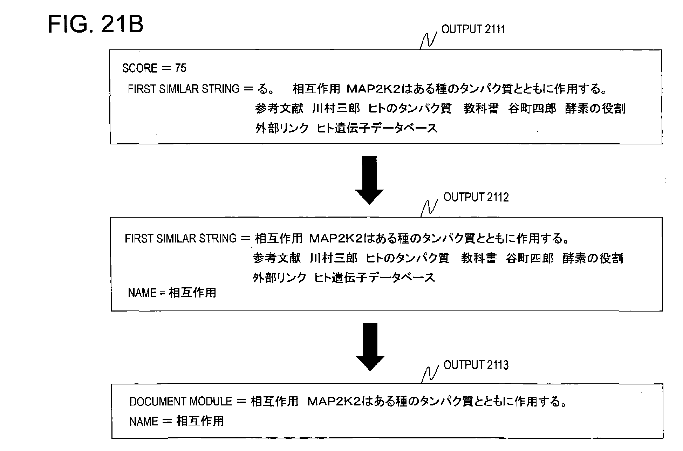

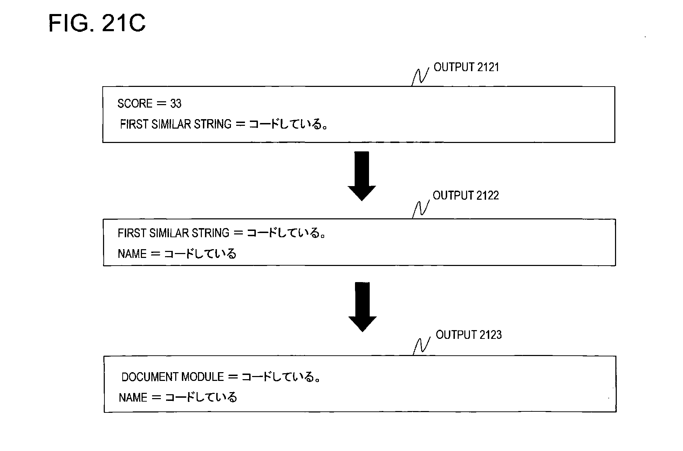

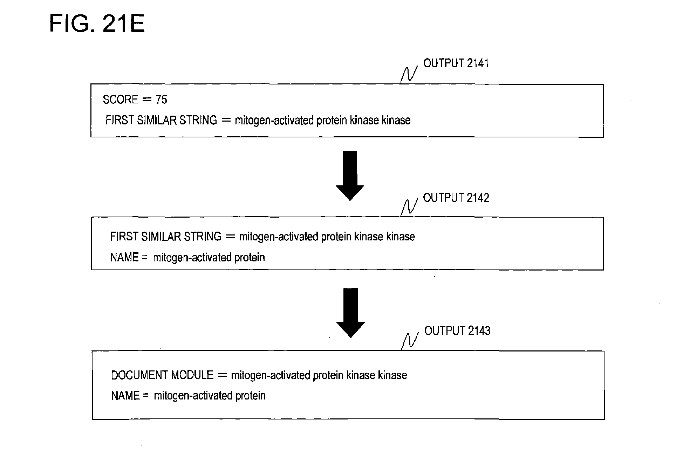

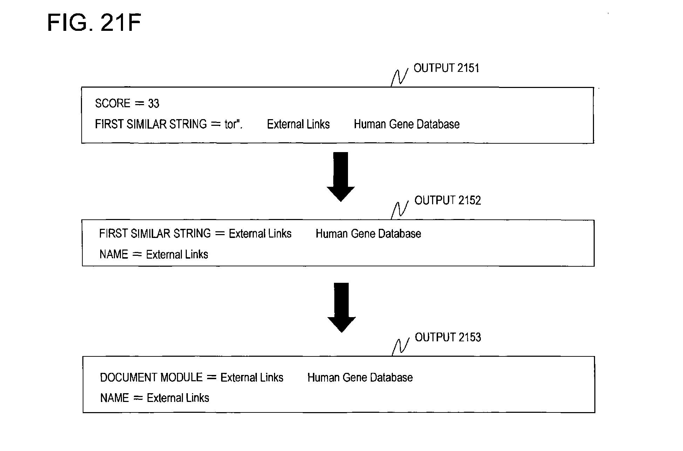

FIGS. 21A to 21F are explanatory diagrams illustrating specific examples of the processing carried out by the document module making module 106 according to the embodiment of this invention.

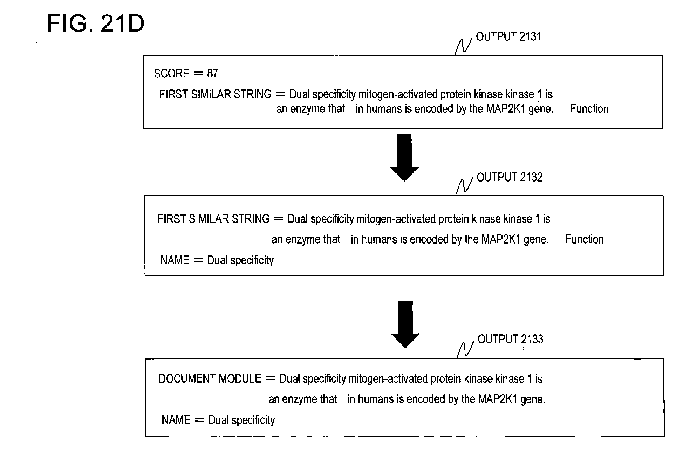

FIGS. 21A to 21C illustrate flows of processing on the documents illustrated in FIGS. 16A and 16B. FIGS. 21D. to 21F illustrate flows of processing on the documents illustrated in FIGS. 16C and 16D.

In a case where an output 2101 is output as a result of the processing in Step S2001, the document module making module 106 determines, in Step S2004, whether or not the item strings illustrated in FIG. 19A are included in a start portion of the first similar string.

On this occasion, the start portion of the first similar string does not include the item strings illustrated in FIG. 19A. Thus, the document module making module 106 does not change the start position of each of the first similar strings included in the selected group. Moreover, the document module making module 106 sets the start portion of the first similar string as the name of the group. The document module making module 106, which has carried out the above-mentioned processing, outputs an output 2102.

Further, in Step S2006, the document module making module 106 determines whether or not an end portion of the first similar string includes item strings illustrated in FIG. 19A.

On this occasion, the end portion of the first similar string includes the item string illustrated in FIG. 19A. Thus, the document module making module 106 changes the end position of each of all of the first similar strings included in the selected group. The document module making module 106, which has carried out the above-mentioned processing, outputs an output 2103.

In a case where an output 2111 is output as a result of the processing in Step S2001, the document module making module 106 determines, in Step S2004, whether or not the item strings illustrated in FIG. 19A are included in a start portion of the first similar string.

On this occasion, the start portion of the first similar string includes the item string illustrated in FIG. 19A. Thus, the document module making module 106 changes the start position of each of all of the first similar strings included in the group. Moreover, the document module making module 106 sets the item string as the name of the group. The document module making module 106, which has carried out the above-mentioned processing, outputs an output 2112.

Further, in Step 2006, the document module making module 106 determines whether or not an end portion of the first similar string includes item strings illustrated in FIG. 19A.

On this occasion, the end portion of the first similar string includes a plurality of item strings illustrated in FIG. 19A. Thus, the document module making module 106 changes the end position of each of all of the first similar strings included in the group to the end position of an item string closest to the start. The document module generation module 106, which has carried out the above-mentioned processing, outputs an output 2113.

In a case where an output 2121 is output as a result of the processing in Step S2001, the document module making module 106 determines, in Step S2004, whether or not the item strings illustrated in FIG. 19A are included in a start portion of the first similar string.

On this occasion, the start portion of the first similar string does not include the item strings illustrated in FIG. 19A. Thus, the document module making module 106 does not change the start position of each of the first similar strings included in the group. Moreover, the document module making module 106 sets the start portion of the first similar string as the name of the group. The document module making module 106, which has carried out the above-mentioned processing, outputs an output 2122.

Further, in Step 2006, the document module making module 106 determines whether or not an end portion of the first similar string includes the item strings illustrated in FIG. 19A.

On this occasion, the end portion of the first similar string does not include the item strings illustrated in FIG. 19A. Thus, the document module making module 106 does not change the end position of each of the first similar strings included in the group. The document module making module 106, which has carried out the above-mentioned processing, outputs an output 2123.

It should be noted that the same processing is applied to alphabetic character codes, and descriptions of FIGS. 21D to 21F are therefore omitted.

As described above, the document module making module 106 makes a document module from a first similar string based on item strings included in a table-of-content portion. According to this invention, it is possible to correctly determine a discontinuity in a document by the processing applied only on the strings. Moreover, the management of document modules for each of the groups, and the name of a group determined based on an item string enable efficient construction of a database.

According to this invention, through the processing carried out by the modules including the document file input module 101 to the document module making module 106, it is possible to make document modules by the processing applied only to the strings.

The item string processing module 107, the replaceable string extraction module 108, and the document module editing module 109 carry out processing for constructing more efficient and proper document module database.

The item string processing module 107 associates item strings with each other by using the dictionary 212. This means that document modules are associated with each other in each of the groups. As a result, it is possible to manage all related document modules from a single item string.

The dictionary 212 includes a synonym dictionary and a semantic dictionary. Herein, the synonym dictionary refers to a dictionary which organizes relationships among words which are the same in meaning and different in notation. Moreover, the semantic dictionary refers to a dictionary which classifies relationships among words in accordance with hierarchical relationships in meaning of words (such as mammal (hypernym) and dog (hyponym)). It should be noted that the semantic dictionary may make classification in accordance with relationships between part and whole in addition to those between hypernyms and hyponyms. It should be noted that the processing using the dictionary may be omitted.

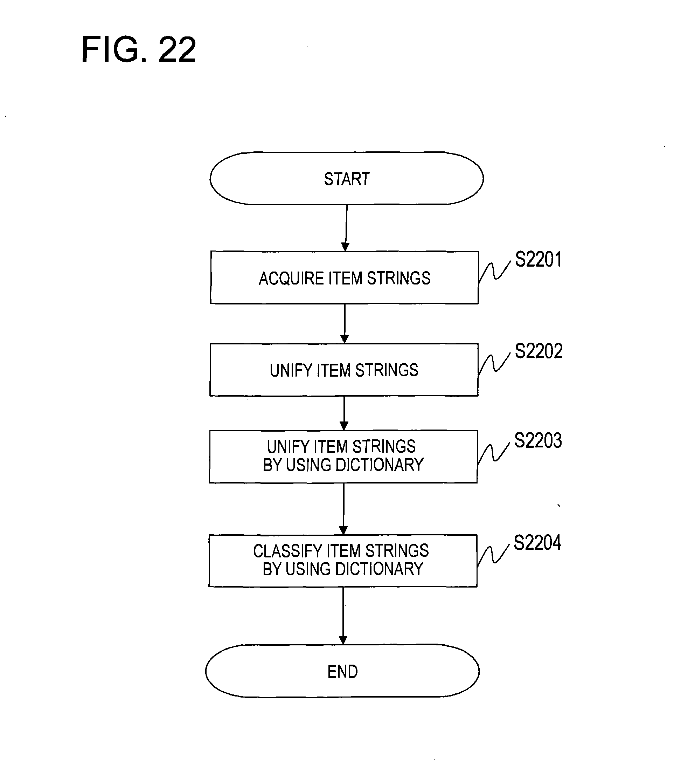

FIG. 22 is a flowchart illustrating the processing carried out by the item string processing module 107 according to the embodiment of this invention.

First, the item string processing module 107 refers to the document file management table 301 and the item string management table 303, thereby acquiring item strings included in a table-of-contents portion for each subject document (Step S2201). Specifically, the following processing is carried out.

The item string processing module 107 refers to document IDs 602 in the item string management table 303, and acquires the entry having the same document ID 602. In other words, the item string processing module 107 identifies item strings included in the table-of-contents portion of one subject document.

The item string processing module 107 refers to the document file management table 301, and searches for entries having a document ID 401 which is the same as the document ID 602, thereby acquiring the string information 403.

The item string processing module 107 acquires the item strings based on the string information 403, the start position 603, and the string length 604.

The processing in Step S2201 has been described above.

Then, the item string processing module 107 unifies the item strings for the respective subject documents (Step S2202). Specifically, the following processing is carried out.

The item string processing module 107 compares item strings included in the table-of-contents portions of the respective subject documents with each other, thereby searching for the same item string. As the comparison method, for example, processing of matching strings is conceivable.

In a case where the same item string is retrieved, the item string processing module 107 unifies a plurality of entries corresponding to the same item string. On this occasion, the item string processing module 107 newly assigns an item string ID. Moreover, the document ID 602 includes document IDs of a plurality of subject documents.

The item string processing module 107 reflects the newly assigned item string ID to the document module management table 305. It should be noted that the newly assigned item string ID is not reflected to entries having an item string ID 802 of "0".

The processing in Step S2202 has been described above.

Then, the item string processing module 107 unifies the item strings by using the synonym dictionary (Step S2203). In other words, entries for item strings which are different in string, but are the same in meaning are unified into one entry. Specifically, the following processing is carried out.

The item string processing module 107 refers to the document file management table 301 and the item string management table 303, thereby acquiring item strings.

Then, the item string processing module 107 searches for item strings which are the same in meaning by using the synonym dictionary.

The item string processing module 107 unifies the retrieved entries into one entry. On this occasion, the item string processing module 107 newly assigns an item string ID.

A document ID 602 of the entry obtained as a result of the unification stores a plurality of document IDs. Moreover, a plurality of values corresponding to the unified item strings are stored in the start position 603 and the string length 604 of the entry obtained as a result of the unification.

Further, the item string processing module 107 reflects the newly assigned item string ID to the document module management table 305. It should be noted that the newly assigned item string ID is not reflected to entries having an item string ID 802 of "0".

The processing in Step S2203 has been described above.

Then, the item string processing module 107 uses the semantic dictionary, thereby classifying the respective item strings by the level in hierarchy (Step S2204), and finishes the processing. Specifically, the following processing is carried out.

The item string processing module 107 refers to the document file management table 301 and the item string management table 303, thereby acquiring the item strings.

Then, the item string processing module 107 searches for item strings in a hierarchical relationship by using the semantic dictionary.

Out of the retrieved item strings, the item string IDs 601 of entries corresponding to item strings, which are hyponyms in the hierarchy, are changed. As a method for the change, a method of associating an item string ID 601 of an entry corresponding to an item string, which are hypernyms in the hierarchy, with the item string ID 601 of this entry, and storing the item string ID 601 acquired as a result of the association is conceivable.

For example, in a case where an item string having an item string ID 601 of "1" is a hypernym in hierarchy, and an item string having an item string ID 601 of "2" is a hyponym in hierarchy, the item string ID 601 corresponding to the item string, which is a hyponym in hierarchy, is changed to "2-1".

It should be noted that the changed item string ID 601 needs not to be reflected to the document module management table 305.

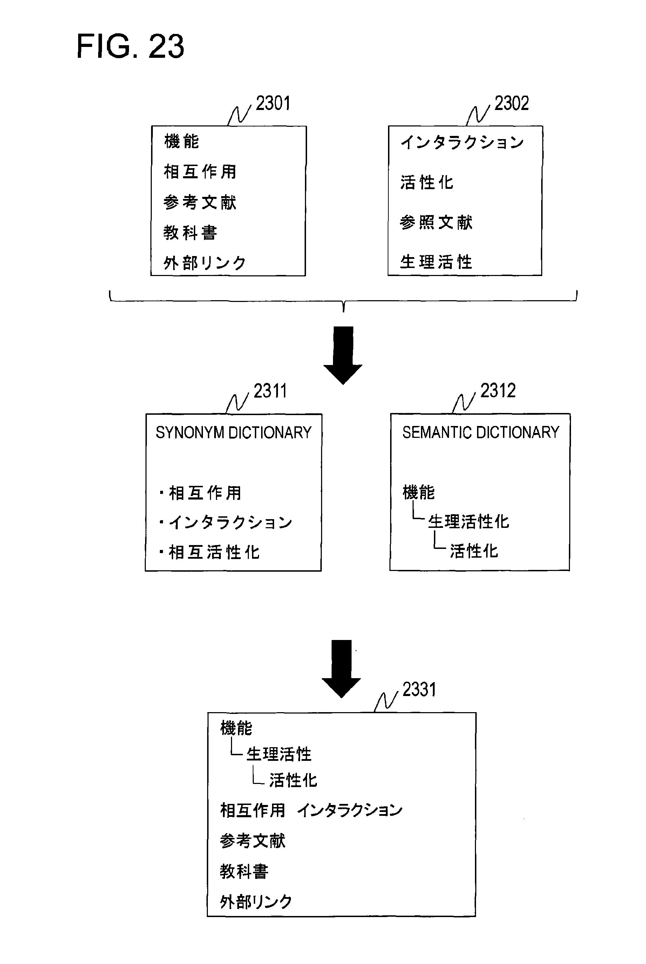

FIG. 23 is an explanatory diagram illustrating a flow of processing carried out by the item string processing module 107 according to the embodiment of this invention.

In Step S2201, the item string processing module 107 acquires item strings included in the table-of-contents portions 2301 and 2302.

Further, in Steps S2202 and S2203, the item string processing module 107 unifies the item strings by using a synonym dictionary 2311 and a semantic dictionary 2312.

As a result of the above-mentioned processing, a unified result 2331 illustrated in FIG. 23 is output.

The replaceable string extraction module 108 extracts replaceable strings from made document modules. For example, the replaceable string extraction module 108 extracts strings representing names of objects, names of places, and model numbers of products, for example. It should be noted that a dictionary may not be used.

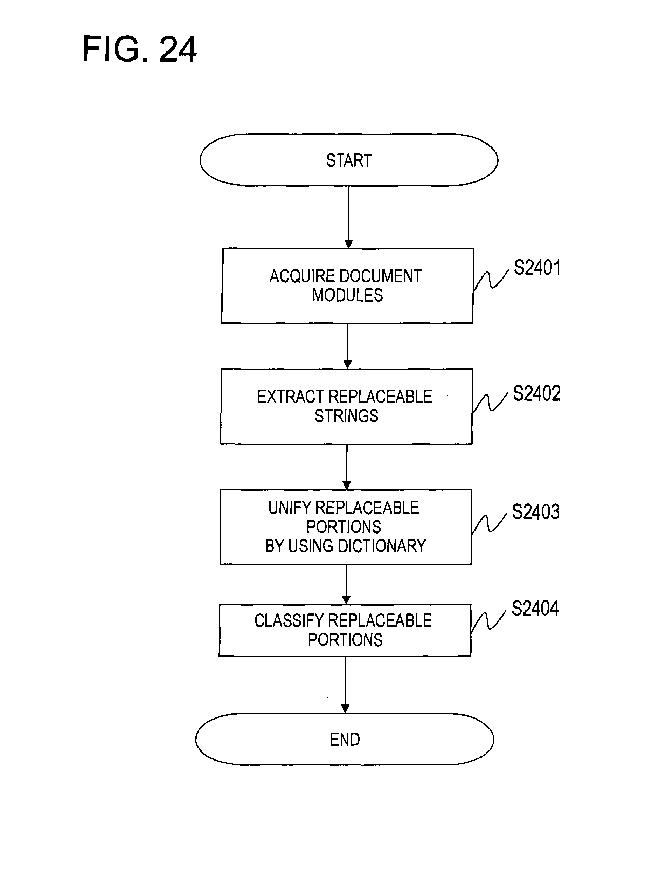

FIG. 24 is a flowchart illustrating the processing carried out by the replaceable string extraction module 108 according to the embodiment of this invention.

The replaceable string extraction module 108 refers to the document module management table 305, thereby acquiring document modules having the same group ID 801 (Step S2401). Specifically, the following processing is carried out.

The replaceable string extraction module 108 selects one entry from the document module management table 305. The replaceable string extraction module 108 refers to the correspondence management table 304, and searches for all entries having the same group ID 701 as a group ID 801 of the selected entry.

The replaceable string extraction module 108 refers to the similar string management table 302 based on the similar string ID 702 of the retrieved entries, thereby searching for corresponding entries.

The replaceable string extraction module 108 refers to the document file management table 301 based on document IDs 502 of the entries retrieved from the similar string management table 302, thereby acquiring string information 403.

The replaceable string extraction module 108 acquires document modules based on the string information 403, the start positions 503, and the string lengths 504 of the respective document modules.

The processing in Step S2401 has been described above.

Then, the replaceable string extraction module 108 compares the respective acquired document modules with each other, thereby extracting replaceable strings (Step S2402). For this processing, it is conceivable to use a result of the processing carried out by the document similarity evaluation module 103.

For example, the replaceable string extraction module 108 identifies a different character between document modules based on the processing result obtained by the document similarity evaluation module 103, and extracts strings having a predetermined string length centered around the different character from the respective modules. The string length can be arbitrarily set by the user. It should be noted that the replaceable string extraction module 108 may extract meaningful strings by using the dictionary 212.

Then, the replaceable string extraction module 108 unifies the extracted strings by using the synonym dictionary (Step S2403).

The replaceable string extraction module 108 classifies the replaceable strings by using the semantic dictionary (Step S2404). For example, the replaceable string extraction module 108 classifies the replaceable strings into names of places, model numbers of products, names of products, and the like. It should be noted that the replaceable string extraction module 108 stores a processing result in a replaceable string management table 2500 to be described below.

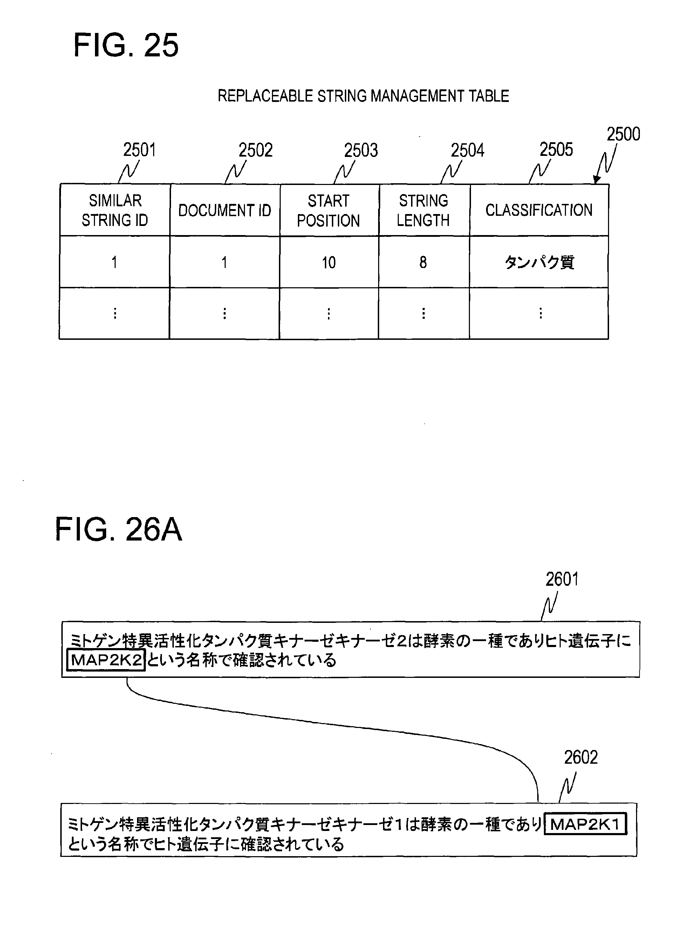

FIG. 25 is an explanatory diagram illustrating an example of the replaceable string management table 2500 according to the embodiment of this invention. The replaceable string management table 2500 is stored in the document module database 211.

The replaceable string management table 2500 includes similar string IDs 2501, document IDs 2502, start positions 2503, string lengths 2504, and classifications 2505.

The similar string ID 2501 stores an identifier for identifying a first similar string corresponding to a document module. The similar string ID 2501 is the same as the similar string ID 501.

The document ID 2502 stores a document ID for identifying a subject document. The document ID 2502 is the same as the document ID 401.

The start position 2503 stores a start position of a replaceable string out of the first similar string.

The string length 2504 stores the number of characters of the replaceable string out of the first similar string.

The classification 2505 stores information on the classification of the replaceable string.

The document making module 100 recognizes, by referring to the replaceable string management table 2500, the subject document including the first similar string from the similar string ID 2501 and the document ID 2505, and recognizes a position of a replaceable string from the start position 2503 and the string length 2504. Moreover, the document making module 100 can show, through the classification 2505, the user what kind of string the replaceable string can be replaced with.

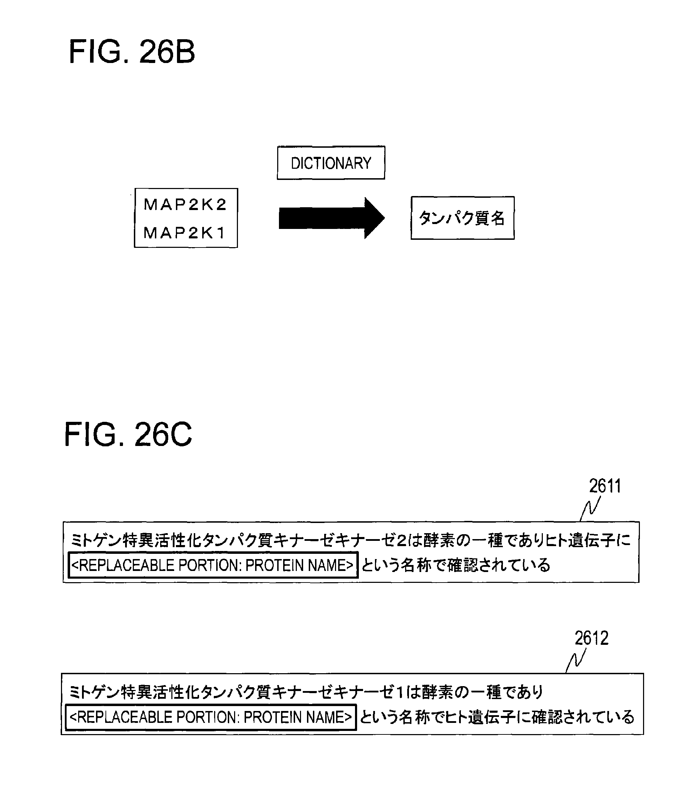

FIGS. 26A, 26B, and 26C are explanatory diagrams illustrating a specific example of the processing executed by the replaceable string extraction module 108 according to the embodiment of this invention.

In Step S2401, the replaceable string extraction module 108 reads out document modules 2601 and 2602 illustrated in FIG. 26A.

In Step S2402, the replaceable string extraction module 108 compares the document module 2601 and the document module 2602 with each other, thereby extracting a replaceable string. In an example illustrated in FIG. 26A, a string "MAP2K2" is extracted from the document module 2601, and a string "MAP2K1" is extracted from the document module 2602.

In Step S2403, the replaceable string extraction module 108 unifies the extracted strings by using the dictionary.

In Step S2404, the replaceable string extraction module 108 classifies the replaceable strings by using the dictionary as illustrated in FIG. 26B. On this occasion, the extracted strings are classified into a name of protein.

As a result of the above-mentioned processing, document modules 2611 and 2622 illustrated in FIG. 26C are registered to the document module database 211.

The document module editing module 109 presents a result of made document modules to the user, and receives editing operations from the user.

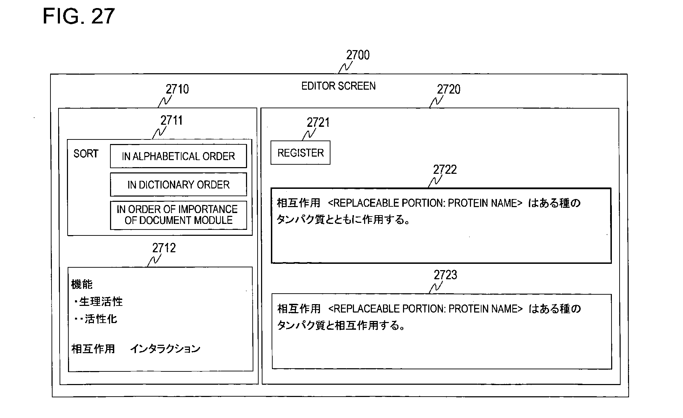

FIG. 27 is an explanatory diagram illustrating an editing screen according to the embodiment of this invention.

An editing screen 2700 is an image displayed on the display 222. The editing screen 2700 includes a name editing portion 2710 and a document module editing portion 2720.

The name editing portion 2710 is a display portion for displaying names of document modules, and editing unified results by the user. The name editing portion 2710 is a display portion mainly used for editing the unified results of item strings.

The name editing portion 2710 includes a selection portion 2711 and an editing portion 2712.

The selection portion 2711 is a display portion for selecting an order of sorting names of document modules. It should be noted that examples of a method of sorting names of document modules include a method of sorting the names in an index order, in order of classification by the semantic dictionary, and in order of importance of document modules. Herein, the importance of a document module refers to a ratio of subject documents including a corresponding document module to entire subject documents. A document module higher in this ratio can be defined as a document module higher in usability.

The editing portion 2712 is a display portion for displaying names of document modules, and receiving editing operations on the names of the document modules. The editing portion 2712 mainly receives editing operations on unified item strings.

The document module editing portion 2720 is a display portion for displaying document modules for each of the names of the document modules displayed in the name editing portion 2710, and editing the document modules by the user.

The document module editing portion 2720 includes a registration button 2721, a document module display portion 2722, and a document module editing portion 2723.

The registration button 2721 is an operation button for reflecting an editing result of a document module.

The document module display portion 2722 is a display portion for displaying document modules corresponding to item strings displayed in the editing portion 2712. According to this embodiment, a plurality of document modules having the same name are displayed.

The document module editing portion 2723 is a display portion for editing a document module. For example, the document module editing portion 2723 enables selection of a proper document module out of the plurality of document modules displayed in the document module display portion 2722. It should be noted that, as a method of editing the selected document module, the same method as an ordinary method of editing a document may be used, and a description thereof is therefore omitted.

In a case where the registration button 2721 is operated, information on a document module edited by the user is reflected to the document module database 211.

According to this embodiment, a document written in a natural language is to be processed, but the same processing can be applied to a document in a text format explicitly showing a structure by using tags such as that in the XML format. In this case, a table-of-contents portion and document modules only need to be extracted so as not to make a division between tags. Moreover, a method of checking an extracted string so that the extracted string is well formed is conceivable.

A well-formed XML document is an XML document following the grammar required for the XML, and there are requirements that a start tag and an end tag are all paired, and only a start tag should not be within a structure.

According to this embodiment, the document file input module 101, the document arrangement analysis module 102, and the inter-document similarity evaluation module 103 carry out the processing so that first similar strings serving as document modules can be extracted for each of the correspondences among subject documents. It should be noted that the extracted first similar strings may be stored as document modules in the document module database 211.

The self-similarity evaluation module 104, the table-of-contents portion extraction module 105, and the document module making module 106 carry out the processing so that a start position and an end position of a document are corrected, and document modules are grouped for each of the item strings.

Further, the item string processing module 107, the replaceable string extraction module 108, and the document module editing module 109 carry out the processing so that more proper document modules are made.

A description is now given of an example of use of the document module database 211.

First, the user inputs items relating to a document the user wants to produce. In a case where the computer 200 receives the input, the computer 200 refers to the item string management table 303, thereby searching for entries of item strings matching the input. It should be noted that it is not necessary for an entry to match the input completely, and an entry that is high in similarity may be retrieved.

Then, the computer 200 refers to the document module management table 305 based on item string IDs 601 of the entries retrieved from the item string management table 303, thereby searching for corresponding entries.

The computer 200 refers to the correspondence management table 304 based on group IDs 801 of the entries retrieved from the document module management table 305, thereby searching for entries matching the group IDs 801.

The computer 200 can refer to the item string management table 303 based on similar string IDs 702 of the entries retrieved from the correspondence management table 304, thereby acquiring all document modules. The computer 200 displays the acquired document modules to the user. It should be noted that the computer 200 may sort and display the document modules in descending order in the frequency of use.

As a result, the user can efficiently produce a document.

According to the exemplary embodiment of this invention, document modules can automatically be made from a plurality of subject documents. Moreover, document modules are stored in descending order of a utilization ratio in the document module database, and are associated with each other for each of the names of document modules, and hence a document module database high in convenience can be constructed.

While the present invention has been described in detail and pictorially in the accompanying drawings, the present invention is not limited to such detail but covers various obvious modifications and equivalent arrangements, which fall within the purview of the appended claims.

**Claims**

1. A method of making a document module, which is performed in a computer system including a computer and a document module database for storing management information on a document module serving as an element constituting a document,
the computer having a processor, a memory coupled to the processor, and a first interface coupled to the processor, for coupling the computer to another device,
the document module database having a controller, a storage medium coupled to the controller, and a second interface for coupling the document module database to another device,
the memory storing a program for realizing a document module making module for making the document module,
the document module making module including an analysis module for extracting, from a document file including strings, a subject document which is information on the strings, and a similarity calculation module for calculating a similarity in an arrangement of characters between the strings,
the method including:

a first step of receiving, by the document module making module, a plurality of the document files;
a second step of extracting, by the document module making module, the subject document from each of the plurality of the document files by analyzing the each of the plurality of the document files, and storing a plurality of the extracted subject documents in the document module database;
a third step of reading, by the document module making module, the plurality of the subject documents from the document module database, comparing the plurality of the read subject documents with each other to calculate the similarity in the arrangement of the characters of the strings between the plurality of the read subject documents, and extracting first similar strings based on the calculated similarity;
a fourth step of constituting, by the document module making module, a group for each correspondence in the first similar strings between the plurality of the subject documents; and
a fifth step of registering, by the document module making module, for each group, each of the first similar strings as the document module to the document module database.

2. The method of making a document module according to claim 1, further including:

a sixth step of comparing the strings in the plurality of the subject documents with each other to calculate the similarity in the arrangement of the characters of the strings, and extracting second similar strings based on the calculated similarity;
a seventh step of extracting a table-of-contents portion, which is a string portion characterizing the plurality of the subject documents, based on a distribution in position of the extracted second similar strings;
an eighth step of selecting, for each group, one of the document modules included in the group, and searching the selected one of the document modules for an item string, which is one of the second similar strings included in the table-of-contents portion;
a ninth step of determining the retrieved item string as a group name of the group; and
a tenth step of registering the group name and the document module associated with each other to the document module database.

3. The method of making a document module according to claim 2, wherein the eighth step includes:

searching a string portion at a start of the selected one of the document modules for the item string; and
changing start positions of all of the document modules included in the group to positions of a start character of the retrieved item string, and
wherein the ninth step includes determining the retrieved item string as the group name.

4. The method of making a document module according to claim 3, further including:

an eleventh step of searching, after the ninth step is carried out, a string portion at an end of the selected one of the document modules for the item string; and
a twelfth step of subsequently changing end positions of the all of the document modules included in the group to positions of a character in front of a start character of the retrieved item string.

**5.** The method of making a document module according to claim 4, wherein the computer system further includes a storage device for storing a dictionary, and
wherein the computer is capable of making access to the storage device, and
wherein the method further includes:

referring, after the twelfth step is carried out, to the dictionary to identify a meaning of each of the item strings, and identifying a correspondence between the item strings based on the identified meaning of the each of the item strings; and
subsequently unifying the item strings based on the identified correspondence.

**6.** The method of making a document module according to claim 4, further including:

comparing, after the twelfth step is carried out, the document modules included in the group to extract at least one different string portion; and
subsequently registering each of the at least one different string portion as a replaceable string to the document module database.

**7.** The method of making a document module according to claim 4, wherein the computer system further comprises an input/output device for one of inputting information to the computer, and displaying a result of processing carried out by the computer, and
wherein the method further includes:

outputting, after the twelfth step is carried out, display information, which is used for editing the document module to be stored in the document module database, to the input/output device; and
subsequently changing a registered content of the document module to be stored in the document module database based on editing information input from the input/output device.

**8.** A computer system, comprising:

a computer; and
a document module database for storing management information on a document module serving as an element constituting a document,
the computer having a processor, a memory coupled to the processor, and a first interface coupled to the processor, for coupling the computer to another device,
the document module database having a controller, a storage medium coupled to the controller, and a second interface for coupling the document module database to another device,
the computer further having a document module making module for making the document module,

wherein the document module making module is configured to:

receive a plurality of document files;
extract a subject document from each of the plurality of document files by analyzing the each of the plurality of document files, and store a plurality of the extracted subject documents in the document module database;
read the plurality of the subject documents from the document module database, compare the plurality of the read subject documents with each other to calculate a similarity in an arrangement of characters of strings between the plurality of the read subject documents, and extract first similar strings based on the calculated similarity;
constitute a group for each correspondence in the first similar strings between the plurality of the subject documents; and
register, for each group, each of the first similar strings as the document module to the document module database.

**9.** The computer system according to claim 8, wherein, after constituting the group, the document module making module is further configured to:

compare the strings in the plurality of the subject documents with each other to calculate the similarity in the arrangement of the characters of the strings, and extract second similar strings based on the calculated similarity;
extract a table-of-contents portion, which is a string portion characterizing the plurality of the subject documents, based on a distribution in position of the extracted second similar strings;

select, for each group, one of the document modules included in the group, and search the selected one of the document modules for an item string, which is one of the second similar strings included in the table-of-contents portion;

determine the retrieved item string as a group name of the group; and

register the group name and the document module associated with each other to the document module database.

10. The computer system according to claim 9,

   wherein the document module making module is further configured to, in the searching of the selected one of the document modules for the item string, which is the second similar string contained in the table-of-contents portion:

   search a string portion at a start of the selected one of the document modules for the item string; and
   change starting positions of all of the document modules included in the group to positions of a start character of the retrieved item string, and

   wherein the document module making module determines, in the determining as the group name, the retrieved item string as the group name.

11. The computer system according to claim 10, wherein, after determining the retrieved item string as the group name, the document module making module is further configured to:

   search a string portion at an end of the selected one of the document modules for the item string; and
   change end positions of the all of the document modules included in the group to positions of a character in front of a start character of the retrieved item string.

12. The computer system according to claim 11, further comprising a storage device for storing a dictionary,

   wherein the computer is capable of making access to the storage device, and
   wherein the document module making module is further configured to:

   refer, after changing the end positions of the all of the document modules contained in the group, to the dictionary to identify a meaning of each of the item strings, and identify a correspondence between the item strings based on the identified meaning of the each of the item strings; and
   unify the item strings based on the identified correspondence.

13. The computer system according to claim 11, wherein, after changing the end positions of the all of the document modules contained in the group, the document module making module is further configured to:

   compare the document modules included in the group to extract at least one different string portion; and
   register each of the at least one different string portion as a replaceable string to the document module database.

14. The computer system according to claim 11, further comprising an input/output device for one of inputting information to the computer, and displaying a result of processing carried out by the computer,

   wherein the document module making module is further configured to:

   output, after changing the end positions of the all of the document modules included in the group, display information, which is used for editing the document module to be stored in the document module database, to the input/ output device; and
   change a registered content of the document module to be stored in the document module database based on editing information input from the input/ output device.

15. The computer system according to claim 9, wherein the document module making module extracts, in the extracting of the table-of-contents portion, a portion in which the second similar strings concentrate at a ratio equal to or more than a predetermined ratio in a predetermined range as the table-of-contents portion.

# FIG. 1

DOCUMENT FILE ~ 120

DOCUMENT MAKING MODULE ~ 100

DOCUMENT FILE INPUT MODULE ~ 101

DOCUMENT ARRANGEMENT ANALYSIS MODULE ~ 102

INTER-DOCUMENT SIMILARITY EVALUATION MODULE ~ 103

SELF-SIMILARITY EVALUATION MODULE ~ 104

TABLE-OF-CONTENT PORTION EXTRACTION MODULE ~ 105

DOCUMENT MODULE MAKING MODULE ~ 106

ITEM STRING PROCESSING MODULE ~ 107

REPLACEABLE STRING EXTRACTION MODULE ~ 108

DOCUMENT MODULE EDITING MODULE ~ 109

DOCUMENT MODULE ~ 130

# FIG. 2

# FIG. 3

211

DOCUMENT MODULE DATABASE

301

DOCUMENT FILE
MANAGEMENT TABLE

302

SIMILAR STRING
MANAGEMENT TABLE

303

ITEM STRING
MANAGEMENT TABLE

304

CORRESPONDENCE
MANAGEMENT TABLE

305

DOCUMENT MODULE
MANAGEMENT TABLE

# FIG. 4

DOCUMENT FILE MANAGEMENT TABLE

301

| 401<br>DOCUMENT ID | 402<br>DOCUMENT FILE ID | 403<br>STRING INFORMATION |
|---|---|---|
| 1 | FILE_1 | MITOGEN-ACTIVATED... |
| ⋮ | ⋮ | ⋮ |

# FIG. 5

SIMILAR STRING MANAGEMENT TABLE

|  501 | 502 | 503 | 504 302 |
| --- | --- | --- | --- |
| SIMILAR STRING ID | DOCUMENT ID | START POSITION | STRING LENGTH |
| 1 | 1 | 1 | 256 |
| ⋮ | ⋮ | ⋮ | ⋮ |

# FIG. 6

ITEM STRING MANAGEMENT TABLE

| 601 | 602 | 603 | 604 303 |
| --- | --- | --- | --- |
| ITEM STRING ID | DOCUMENT ID | START POSITION | STRING LENGTH |
| 1 | 1 | 128 | 4 |
| ⋮ | ⋮ | ⋮ | ⋮ |

# FIG. 7

CORRESPONDENCE MANAGEMENT TABLE

304

| 701 | 702 |
| --- | --- |
| GROUP ID | SIMILAR STRING ID |
| 1 | 1 |
| ⋮ | ⋮ |

# FIG. 8

DOCUMENT MODULE MANAGEMENT TABLE

305

| 801 | 802 | 803 |
| --- | --- | --- |
| GROUP ID | ITEM STRING ID | NAME |
| 1 | 1 | 0 |
| 2 | 0 | MITOGEN ACTIVITY |
| ⋮ | ⋮ | ⋮ |

# FIG. 9

DOCUMENT 901

921　931　941　951

DOCUMENT 902

922　932　952

DOCUMENT 903

923　933　943

DOCUMENT 904

934　944　954

# FIG. 10A

DOCUMENT 1001

文章部品を利用した文書作成方法

DOCUMENT 1002

文書を再利用した文書作成方法

# FIG. 10B

DOCUMENT 1011

| Method of making document |
|---|

DOCUMENT 1012

| Method of making text |
|---|

# FIG. 11A

| | | 1 | 2 | 3 | 4 | 5 | 6 | 7 | 8 | 9 | 10 | 11 | 12 | 13 | 14 | 15 | 16 |
|---|---|---|---|---|---|---|---|---|---|---|---|---|---|---|---|---|---|
| | | | 文 | 書 | 部 | 品 | を | 利 | 用 | し | た | 文 | 書 | 作 | 成 | 方 | 法 |
| 1 | | 0 | 0 | 0 | 0 | 0 | 0 | 0 | 0 | 0 | 0 | 0 | 0 | 0 | 0 | 0 | 0 |
| 2 | 文 | 0 | 2 | 0 | 0 | 0 | 0 | 0 | 0 | 0 | 0 | 2 | 0 | 0 | 0 | 0 | 0 |
| 3 | 書 | 0 | 0 | 4 | 2 | 0 | 0 | 0 | 0 | 0 | 0 | 0 | 2 | 0 | 0 | 0 | 0 |
| 4 | を | 0 | 0 | 2 | 2 | 0 | 2 | 0 | 0 | 0 | 0 | 0 | 0 | 0 | 0 | 0 | 0 |
| 5 | 再 | 0 | 0 | 0 | 0 | 0 | 0 | 0 | 0 | 0 | 0 | 0 | 0 | 0 | 0 | 0 | 0 |
| 6 | 利 | 0 | 0 | 0 | 0 | 0 | 0 | 2 | 0 | 0 | 0 | 0 | 0 | 0 | 0 | 0 | 0 |
| 7 | 用 | 0 | 0 | 0 | 0 | 0 | 0 | 0 | 4 | 2 | 0 | 0 | 0 | 0 | 0 | 0 | 0 |
| 8 | し | 0 | 0 | 0 | 0 | 0 | 0 | 0 | 2 | 6 | 4 | 2 | 0 | 0 | 0 | 0 | 0 |
| 9 | た | 0 | 0 | 0 | 0 | 0 | 0 | 0 | 0 | 4 | 8 | 6 | 4 | 2 | 0 | 0 | 0 |
| 10 | 文 | 0 | 2 | 0 | 0 | 0 | 0 | 0 | 0 | 2 | 6 | 10 | 8 | 6 | 4 | 2 | 0 |
| 11 | 書 | 0 | 0 | 2 | 0 | 0 | 0 | 0 | 0 | 0 | 4 | 8 | 12 | 10 | 8 | 6 | 4 |
| 12 | 作 | 0 | 0 | 0 | 0 | 0 | 0 | 0 | 0 | 0 | 2 | 6 | 10 | 14 | 12 | 10 | 8 |
| 13 | 成 | 0 | 0 | 0 | 0 | 0 | 0 | 0 | 0 | 0 | 0 | 4 | 8 | 12 | 16 | 14 | 12 |
| 14 | 方 | 0 | 0 | 0 | 0 | 0 | 0 | 0 | 0 | 0 | 0 | 2 | 6 | 10 | 14 | 18 | 16 |
| 15 | 法 | 0 | 0 | 0 | 0 | 0 | 0 | 0 | 0 | 0 | 0 | 0 | 4 | 8 | 12 | 16 | 20 |

# FIG. 11B

| | | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 | 24 | 25 | 26 |
|---|---|---|---|---|---|---|---|---|---|---|---|---|---|---|---|---|---|---|---|---|---|---|---|---|---|---|---|
| | | | M | e | t | h | o | d | | o | f | | m | a | k | i | n | g | | d | o | c | u | m | e | n | t |
| 1 | | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 |
| 2 | M | 0 | 2 | 0 | 0 | 0 | 0 | 0 | 0 | 0 | 0 | 0 | 0 | 2 | 0 | 0 | 0 | 0 | 0 | 0 | 0 | 0 | 0 | 2 | 0 | 0 | 0 |
| 3 | e | 0 | 0 | 4 | 2 | 4 | 0 | 0 | 0 | 0 | 0 | 0 | 0 | 0 | 0 | 0 | 0 | 0 | 0 | 0 | 0 | 0 | 0 | 0 | 4 | 0 | 0 |
| 4 | t | 0 | 0 | 2 | 6 | 8 | 2 | 0 | 0 | 0 | 0 | 0 | 0 | 0 | 0 | 0 | 0 | 0 | 0 | 0 | 0 | 0 | 0 | 0 | 0 | 2 | 4 |
| 5 | h | 0 | 0 | 0 | 4 | 6 | 6 | 4 | 2 | 0 | 0 | 0 | 0 | 0 | 0 | 0 | 0 | 0 | 0 | 0 | 0 | 0 | 0 | 0 | 0 | 0 | 2 |
| 6 | o | 0 | 0 | 0 | 2 | 4 | 10 | 8 | 6 | 4 | 2 | 0 | 0 | 0 | 0 | 0 | 0 | 0 | 0 | 0 | 2 | 0 | 0 | 0 | 0 | 0 | 0 |
| 7 | d | 0 | 0 | 0 | 0 | 2 | 8 | 12 | 10 | 8 | 6 | 4 | 2 | 0 | 0 | 0 | 0 | 0 | 0 | 2 | 0 | 0 | 0 | 0 | 0 | 0 | 0 |
| 8 | | 0 | 0 | 0 | 0 | 0 | 6 | 10 | 14 | 12 | 10 | 12 | 10 | 8 | 6 | 4 | 2 | 0 | 2 | 0 | 0 | 0 | 0 | 0 | 0 | 0 | 0 |
| 9 | o | 0 | 0 | 0 | 0 | 0 | 8 | 8 | 12 | 16 | 14 | 12 | 10 | 8 | 6 | 4 | 2 | 0 | 0 | 2 | 0 | 0 | 0 | 0 | 0 | 0 | 0 |
| 10 | f | 0 | 0 | 0 | 0 | 0 | 6 | 6 | 10 | 14 | 18 | 16 | 14 | 12 | 10 | 8 | 6 | 4 | 2 | 0 | 0 | 0 | 0 | 0 | 0 | 0 | 0 |
| 11 | | 0 | 0 | 0 | 0 | 0 | 4 | 4 | 12 | 12 | 16 | 20 | 18 | 16 | 14 | 12 | 10 | 8 | 10 | 8 | 6 | 4 | 2 | 0 | 0 | 0 | 0 |
| 12 | m | 0 | 2 | 0 | 0 | 0 | 2 | 2 | 10 | 16 | 14 | 18 | 22 | 20 | 18 | 16 | 14 | 12 | 10 | 8 | 6 | 4 | 2 | 4 | 2 | 0 | 0 |
| 13 | a | 0 | 0 | 0 | 0 | 0 | 0 | 0 | 8 | 10 | 12 | 16 | 20 | 24 | 22 | 20 | 18 | 16 | 14 | 12 | 10 | 8 | 6 | 4 | 2 | 0 | 0 |
| 14 | k | 0 | 0 | 0 | 0 | 0 | 0 | 0 | 6 | 8 | 10 | 14 | 18 | 22 | 26 | 24 | 22 | 20 | 18 | 16 | 14 | 12 | 10 | 8 | 6 | 4 | 2 |
| 15 | i | 0 | 0 | 0 | 0 | 0 | 0 | 0 | 4 | 6 | 8 | 12 | 16 | 20 | 24 | 28 | 26 | 24 | 22 | 20 | 18 | 16 | 14 | 12 | 10 | 8 | 6 |
| 16 | n | 0 | 0 | 0 | 0 | 0 | 0 | 0 | 2 | 4 | 6 | 10 | 14 | 18 | 22 | 26 | 30 | 28 | 26 | 24 | 22 | 20 | 18 | 16 | 14 | 16 | 14 |
| 17 | g | 0 | 0 | 0 | 0 | 0 | 0 | 0 | 0 | 2 | 4 | 8 | 12 | 16 | 20 | 24 | 28 | 32 | 30 | 28 | 26 | 24 | 22 | 20 | 18 | 16 | 14 |
| 18 | | 0 | 0 | 0 | 0 | 0 | 0 | 0 | 2 | 0 | 2 | 10 | 10 | 14 | 18 | 22 | 26 | 30 | 34 | 32 | 30 | 28 | 26 | 24 | 22 | 20 | 18 |
| 19 | t | 0 | 0 | 0 | 2 | 0 | 0 | 0 | 0 | 0 | 0 | 8 | 8 | 12 | 16 | 20 | 24 | 28 | 32 | 32 | 30 | 28 | 26 | 24 | 22 | 20 | 22 |
| 20 | e | 0 | 0 | 2 | 0 | 0 | 0 | 0 | 0 | 0 | 0 | 6 | 6 | 10 | 14 | 18 | 22 | 26 | 30 | 30 | 30 | 28 | 26 | 24 | 26 | 24 | 22 |
| 21 | x | 0 | 0 | 0 | 0 | 0 | 0 | 0 | 0 | 0 | 0 | 4 | 4 | 8 | 12 | 16 | 20 | 24 | 28 | 28 | 28 | 28 | 26 | 24 | 24 | 24 | 22 |
| 22 | t | 0 | 0 | 0 | 2 | 0 | 0 | 0 | 0 | 0 | 0 | 2 | 2 | 6 | 10 | 14 | 18 | 22 | 26 | 26 | 26 | 26 | 26 | 24 | 22 | 22 | 26 |

FIG. 12

利用した文書作成方法

再利用した文書作成方法

| |
|---|
| INSERTED |
| MATCHED |
| MATCHED |
| MATCHED |
| MATCHED |
| MATCHED |
| MATCHED |
| MATCHED |
| MATCHED |
| MATCHED |
| MATCHED |

# FIG. 13

DOCUMENT 901

1301 1303
1302 1304
921 931 941 951

DOCUMENT 902

1311 1313
1312
922 932 952

DOCUMENT 903

1321 1323
1322
923 933 943

DOCUMENT 904

1331 1333
1332 1334
934 944 954

# FIG. 14

```
                    ┌──────────────┐
                    │    START     │
                    └──────┬───────┘
                           │
              ┌────────────▼─────────────┐
              │ ·INITIALIZATION PROCESSING│      S1401
              │           S=0            │
              │           L=0            │
              │      SET THRESHOLD T     │
              └────────────┬─────────────┘
                           │
              ┌────────────▼─────────────┐
              │   READ CHARACTER FROM    │      S1402
              │     SUBJECT DOCUMENT     │
              └────────────┬─────────────┘
                           │
                        S1403
                       ◇◇◇◇◇◇◇
                  DOES CHARACTER
          MATCH ANY ONE OF CHARACTERS ──NO──┐
                 OF SECOND SIMILAR          │
                     STRING ?               │
                       │                    │
                      YES              ┌────▼─────┐
              ┌────────▼─────┐         │  S = S+1 │  S1408
              │   S = S+1    │  S1404  │  k=1/S   │
              │   L = L+1    │         └────┬─────┘
              │   k = 1/S    │              │
              └────────┬─────┘              │
                       │◄───────────────────┘
                    S1405
                   ◇◇◇◇◇◇◇
                    k < T     ──NO──┐
                       │            │
                      YES           │
              ┌────────▼─────┐      │
              │   S = 0      │  S1406│
              │   L = 0      │      │
              └────────┬─────┘      │
                       │◄───────────┘
                    S1407
            ◇◇◇◇◇◇◇◇◇◇
      NO──  IS THERE ANY
            CHARACTER LEFT ?
                       │
                      YES
                 ┌─────▼──────┐
                 │    END     │
                 └────────────┘
```

# FIG. 15

1501

DOCUMENT 1001

1301  1303

1302  1304

921      931      941      951

EP 2 544 100 A2

# FIG. 16A

内容

1　機能

2　相互作用

3　参考文献

4　教科書

5　外部リンク


ミトゲン特異活性化タンパク質キナーゼキナーゼ2は酵素の一種であり
ヒト遺伝子にMAP2K2という名称で確認されている


機能

この遺伝子がコードしているタンパク質はキナーゼの一種である。


相互作用

MAP2K2はある種のタンパク質とともに作用する。


参考文献

川村三郎　ヒトのタンパク質


教科書

谷町四郎　酵素の役割


外部リンク

ヒト遺伝子データベース

# FIG. 16B

ミトゲン特異活性化タンパク質キナーゼキナーゼ1は酵素の一種であり
MAP2K1という名称でヒト遺伝子に確認されている

内容

1　機能
2　相互作用
3　参考文献
4　教科書
5　外部リンク

機能
タンパク質の一種であるキナーゼをコードしている。

相互作用
MAP2K1はある種のタンパク質と相互作用する。

参考文献
山田太郎　膜に存在するキナーゼファミリー

教科書
海畑次郎　マップキナーゼ

外部リンク
遺伝子データベース

# FIG. 16C

Contents

1 Function

2 Interactions

3 References

4 Further reading

5 External Links


Dual specificity mitogen-activated protein kinase kinase 1 is an enzyme that in humans is encoded by the MAP2K1 gene.


Function

The protein encoded by this gene is a member of the dual specificity protein kinase family.


Interactions

MAP2K1 has been shown to interact with C-Raf, Phosphatidylethanolamine binding protein 1, MAP2K1IP1, GRB10, MAPK3, MAPK8IP3, MAPK1 MP1, and MAP3K1.


References

Rampot. "Chromosomal localization of MAPK GENES".


Further reading

Wack J. "Regeneration peptide of mitogen-activated protein kinase (MAP kinase) activator".


External Links

Human Gene Database

# FIG. 16D

Dual specificity mitogen-activated protein kinase kinase 2 is an enzyme that in humans is encoded by the MAP2K2 gene.

Contents

1 Function

2 Interactions

3 References

4 Further reading

5 External Links

Function

The protein encoded by this gene is a dual specificity protein kinase that belongs to the MAP kinase kinase family.

Interactions

MAP2K2 has been shown to interact with MAPK3 and ARAF.

References

Zheng Hoi Kim. "A simple method to detect human MEK1 and MEK2".

Further reading

John Ackerman. "necessary and enforcing factor"

External Links

Gene Database

# FIG. 17A

内容

1 機能

2 相互作用

3 参考文献

4 教科書

5 外部リンク

ミトゲン特異活性化 タンパク質キナーゼ キナーゼ2は酵素の一種であり
ヒト遺伝子に MAP2K2 という名称で確認されている

機能
この遺伝子がコードしている タンパク質はキナーゼ の一種である。

相互作用
MAP2K2 はある種の タンパク質 とともに作用する。

参考文献
川村三郎 ヒトの タンパク質

教科書
谷町四郎 酵素の役割

外部リンク
ヒト遺伝子データベース

# FIG. 17B

Contents

1 Function

2 Interactions

3 References

4 Further reading

5 External Links

Dual specificity mitogen-activated protein kinase kinase 1 is an enzyme that in humans is encoded by the MAP2K1 gene.

Function

The protein encoded by this gene is a member of the dual specificity protein kinase family.

Interactions

MAP2K1 has been shown to interact with C-Raf, Phosphatidylethanolamine binding protein 1, MAP2K1IP1, GRB10, MAPK3, MAPK8IP3, MAPK1 MP1, and MAP3K1.

References

Rampot. "Chromosomal localization of MAPK GENES".

Further reading

Wack J. "Regeneration peptide of mitogen-activated protein kinase (MAP kinase) activator".

External Links

Human Gene Database

## FIG. 18

## FIG. 19A

| 1 | 機能 |
| 2 | 相互作用 |
| 3 | 参考文献 |
| 4 | 教科書 |
| 5 | 外部リンク |

# FIG. 19B

1 Function

2 Interactions

3 References

4 Further reading

5 External Links

# FIG. 20

```
                    ┌─────────────┐
                    │    START    │
                    └─────────────┘
                           │
                           ▼
              ┌──────────────────────┐
              │   CALCULATE SCORES   │   S2001
              │      FOR GROUPS      │
              └──────────────────────┘
                           │
                           ▼
              ┌──────────────────────┐
              │     SORT GROUPS      │   S2002
              └──────────────────────┘
                           │
                           ▼
              ┌──────────────────────┐
              │  SELECT ONE OF GROUPS│   S2003
              └──────────────────────┘
                           │
                           ▼
                    ╱─────────────╲          S2004
                  ╱  DOES START     ╲   NO
                 ╱ PORTION INCLUDE    ╲───────────┐
                  ╲  ITEM STRING ?   ╱            │
                   ╲───────────────╱              ▼
                           │ YES        ┌──────────────────┐   S2009
                           ▼            │  DETERMINE NAME  │
              ┌──────────────────────┐  └──────────────────┘
              │ CHANGE START POSITION│       S2005   │
              │   AND DETERMINE NAME │               │
              └──────────────────────┘               │
                           │◄──────────────────────────┘
                           ▼
                    ╱─────────────╲          S2006
                  ╱  DOES END       ╲   NO
                 ╱ PORTION INCLUDE    ╲───────────┐
                  ╲  ITEM STRING ?   ╱            │
                   ╲───────────────╱              │
                           │ YES                  │
                           ▼                      │
              ┌──────────────────────┐            │
              │ CHANGE END POSITION  │  S2007      │
              └──────────────────────┘            │
                           │◄──────────────────────┘
                           ▼
                    ╱─────────────╲          S2008
           NO     ╱  HAS PROCESSING ╲
        ┌────────╱  BEEN FINISHED ?   ╲
        │         ╲                  ╱
        │          ╲───────────────╱
        │                  │ YES
        │                  ▼
        │           ┌─────────────┐
        │           │     END     │
        │           └─────────────┘
        │
        └──────► (back to SELECT ONE OF GROUPS)
```

# FIG. 21A

OUTPUT 2101

SCORE ＝ 87

FIRST SIMILAR STRING ＝ ミトゲン特異活性化タンパク質キナーゼキナーゼ2は酵素の一種であり
ヒト遺伝子にMAP2K2という名称で確認されている。 機能

OUTPUT 2102

FIRST SIMILAR STRING ＝ ミトゲン特異活性化タンパク質キナーゼキナーゼ2は酵素の一種であり
ヒト遺伝子にMAP2K2という名称で確認されている。 機能
NAME ＝ ミトゲン特異

OUTPUT 2103

DOCUMENT MODULE＝ ミトゲン特異活性化タンパク質キナーゼキナーゼ2は酵素の一種であり
ヒト遺伝子にMAP2K2という名称で確認されている。
NAME ＝ ミトゲン特異

# FIG. 21B

OUTPUT 2111

SCORE = 75

FIRST SIMILAR STRING = る。　相互作用　MAP2K2はある種のタンパク質とともに作用する。
参考文献　川村三郎　ヒトのタンパク質　教科書　谷町四郎　酵素の役割
外部リンク　ヒト遺伝子データベース

OUTPUT 2112

FIRST SIMILAR STRING = 相互作用　MAP2K2はある種のタンパク質とともに作用する。
参考文献　川村三郎　ヒトのタンパク質　教科書　谷町四郎　酵素の役割
外部リンク　ヒト遺伝子データベース
NAME = 相互作用

OUTPUT 2113

DOCUMENT MODULE = 相互作用　MAP2K2はある種のタンパク質とともに作用する。
NAME = 相互作用

# FIG. 21C

OUTPUT 2121

```
SCORE = 33
  FIRST SIMILAR STRING = コードしている。
```

OUTPUT 2122

```
FIRST SIMILAR STRING = コードしている。
NAME = コードしている
```

OUTPUT 2123

```
DOCUMENT MODULE = コードしている。
NAME = コードしている
```

# FIG. 21D

OUTPUT 2131

SCORE = 87

FIRST SIMILAR STRING = Dual specificity mitogen-activated protein kinase kinase 1 is
an enzyme that   in humans is encoded by the MAP2K1 gene.     Function

OUTPUT 2132

FIRST SIMILAR STRING = Dual specificity mitogen-activated protein kinase kinase 1 is
an enzyme that   in humans is encoded by the MAP2K1 gene.     Function

NAME = Dual specificity

OUTPUT 2133

DOCUMENT MODULE = Dual specificity mitogen-activated protein kinase kinase 1 is
an enzyme that   in humans is encoded by the MAP2K1 gene.

NAME = Dual specificity

## FIG. 21E

OUTPUT 2141

SCORE = 75
FIRST SIMILAR STRING = mitogen-activated protein kinase kinase

OUTPUT 2142

FIRST SIMILAR STRING = mitogen-activated protein kinase kinase
NAME = mitogen-activated protein

OUTPUT 2143

DOCUMENT MODULE = mitogen-activated protein kinase kinase
NAME = mitogen-activated protein

# FIG. 21F

OUTPUT 2151

SCORE = 33

FIRST SIMILAR STRING = tor".      External Links      Human Gene Database

OUTPUT 2152

FIRST SIMILAR STRING = External Links      Human Gene Database

NAME = External Links

OUTPUT 2153

DOCUMENT MODULE = External Links      Human Gene Database

NAME = External Links

# FIG. 22

```
            START
              │
              ▼
┌──────────────────────────┐
│   ACQUIRE ITEM STRINGS    │ ~ S2201
└──────────────────────────┘
              │
              ▼
┌──────────────────────────┐
│    UNIFY ITEM STRINGS     │ ~ S2202
└──────────────────────────┘
              │
              ▼
┌──────────────────────────┐
│     UNIFY ITEM STRINGS    │ ~ S2203
│    BY USING DICTIONARY    │
└──────────────────────────┘
              │
              ▼
┌──────────────────────────┐
│   CLASSIFY ITEM STRINGS   │ ~ S2204
│    BY USING DICTIONARY    │
└──────────────────────────┘
              │
              ▼
            END
```

# FIG. 23

2301

機能

相互作用

参考文献

教科書

外部リンク

2302

インタラクション

活性化

参照文献

生理活性

2311

SYNONYM DICTIONARY

・相互作用

・インタラクション

・相互活性化

2312

SEMANTIC DICTIONARY

機能
└生理活性化
　└活性化

2331

機能
└生理活性
　└活性化

相互作用　インタラクション

参考文献

教科書

外部リンク

# FIG. 24

```
                    ┌─────────────────────┐
                    │        START        │
                    └─────────────────────┘
                               │
                               ▼
              ┌──────────────────────────────┐
              │      ACQUIRE DOCUMENT         │  ～ S2401
              │         MODULES              │
              └──────────────────────────────┘
                               │
                               ▼
              ┌──────────────────────────────┐
              │     EXTRACT REPLACEABLE       │  ～ S2402
              │          STRINGS             │
              └──────────────────────────────┘
                               │
                               ▼
              ┌──────────────────────────────┐
              │      UNIFY REPLACEABLE        │  ～ S2403
              │         PORTIONS             │
              │     BY USING DICTIONARY       │
              └──────────────────────────────┘
                               │
                               ▼
              ┌──────────────────────────────┐
              │     CLASSIFY REPLACEABLE      │  ～ S2404
              │          PORTIONS            │
              └──────────────────────────────┘
                               │
                               ▼
                    ┌─────────────────────┐
                    │         END         │
                    └─────────────────────┘
```

# FIG. 25

REPLACEABLE STRING MANAGEMENT TABLE

| SIMILAR STRING ID (2501) | DOCUMENT ID (2502) | START POSITION (2503) | STRING LENGTH (2504) | CLASSIFICATION (2505) |
|---|---|---|---|---|
| 1 | 1 | 10 | 8 | タンパク質 |
| ⋮ | ⋮ | ⋮ | ⋮ | ⋮ |

2500

# FIG. 26A

2601

ミトゲン特異活性化タンパク質キナーゼキナーゼ2は酵素の一種でありヒト遺伝子に MAP2K2 という名称で確認されている

2602

ミトゲン特異活性化タンパク質キナーゼキナーゼ1は酵素の一種であり MAP2K1 という名称でヒト遺伝子に確認されている

## FIG. 26B

DICTIONARY

MAP2K2
MAP2K1

→

タンパク質名

## FIG. 26C

2611

ミトゲン特異活性化タンパク質キナーゼキナーゼ2は酵素の一種でありヒト遺伝子に
<REPLACEABLE PORTION: PROTEIN NAME> という名称で確認されている

2612

ミトゲン特異活性化タンパク質キナーゼキナーゼ1は酵素の一種であり
<REPLACEABLE PORTION: PROTEIN NAME> という名称でヒト遺伝子に確認されている

FIG. 27

2700

EDITOR SCREEN

2710

2720

2711

2721

| SORT | IN ALPHABETICAL ORDER |
| | IN DICTIONARY ORDER |
| | IN ORDER OF IMPORTANCE OF DOCUMENT MODULE |

REGISTER

2722

相互作用 <REPLACEABLE PORTION: PROTEIN NAME> はある種の
タンパク質とともに作用する。

2712

機能
・生理活性
・・活性化

相互作用　インタラクション

2723

相互作用 <REPLACEABLE PORTION: PROTEIN NAME> はある種の
タンパク質と相互作用する。

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• JP 2011148466 A

• JP 2010108453 A

**Non-patent literature cited in the description**

• **T.H. CORMEN et al.** Introduction to Algorism, Vol.2: Designing and Analytical Method of Algorism. 30 December 1995, vol. 2